(19)

**Europäisches Patentamt**
**European Patent Office**
**Office européen des brevets**

(11) **EP 4 310 938 A2**

(12) **EUROPEAN PATENT APPLICATION**

(43) Date of publication:
**24.01.2024 Bulletin 2024/04**

(21) Application number: **23186958.7**

(22) Date of filing: **21.07.2023**

(51) International Patent Classification (IPC):
*H01M 4/134* (2010.01)    *H01M 4/1395* (2010.01)
*H01M 4/66* (2006.01)    *H01M 10/052* (2010.01)
*H01M 10/42* (2006.01)    *H01M 4/36* (2006.01)
*H01M 4/02* (2006.01)

(52) Cooperative Patent Classification (CPC):
**H01M 10/052; H01M 4/134; H01M 4/1395;
H01M 4/667; H01M 10/4235;** H01M 4/366;
H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.07.2022 KR 20220091152**

(71) Applicant: **Samsung SDI Co., Ltd.**
**Yongin-si, Gyeonggi-do 17084 (KR)**

(72) Inventors:
• **LEE, Kanghee**
**17084 Gyeonggi-do (KR)**
• **BAE, Woojin**
**17084 Gyeonggi-do (KR)**
• **WAKITA, Shinya**
**17084 Gyeonggi-do (KR)**
• **LEE, Junyong**
**17084 Gyeonggi-do (KR)**
• **MOON, Jongseok**
**17084 Gyeonggi-do (KR)**
• **PARK, Jongseok**
**17084 Gyeonggi-do (KR)**
• **PARK, Jinhwan**
**17084 Gyeonggi-do (KR)**
• **WOO, Hyunsik**
**17084 Gyeonggi-do (KR)**
• **KIM, Heemin**
**17084 Gyeonggi-do (KR)**

(74) Representative: **Michalski Hüttermann & Partner
Patentanwälte mbB
Kaistraße 16A
40221 Düsseldorf (DE)**

(54) **ANODE FOR LITHIUM METAL BATTERY, LITHIUM METAL BATTERY COMPRISING ANODE AND MANUFACTURING METHOD FOR ANODE FOR LITHIUM METAL BATTERY**

(57) Provided are an anode for lithium metal batteries, a lithium metal battery including the same, and a method of manufacturing the anode for lithium metal batteries. The anode for lithium metal batteries includes: an anode current collector; and a protective layer disposed on the anode current collector, wherein an anode active material layer is disposed or absent between the anode current collector and the protective layer, the protective layer comprises sulfurized polyacrylonitrile (SPAN), and the anode active material layer comprises lithium metal or a lithium alloy.

**EP 4 310 938 A2**

**Description**

CROSS-REFERENCE TO RELATED APPLICATION

This application is based on and claims priority under 35 U.S.C. §119 to Korean Patent Application No. 10-2022-091152, filed on July 22, 2022, in the Korean Intellectual Property Office, the disclosure of which is incorporated by reference herein in its entirety.

BACKGROUND

1. Field

One or more embodiments relate to an anode for lithium metal batteries, a lithium metal battery including the same, and a method of manufacturing an anode for lithium metal batteries.

2. Description of the Related Art

Carbonaceous anode active materials such as graphite are widely used in lithium batteries commercially available at present. Because there is no volume change in carbonaceous anode active materials during a charge/discharge process, lithium batteries have high stability. Graphite has a low theoretical electric capacity of 372 mAh/g.
Lithium metal may be used as an anode active material. Lithium metal has a very high theoretical electric capacity of 3860 mAh/g. Lithium metal may cause short circuits between a cathode and an anode because dendrites are formed and grow on the surface of the lithium metal by side reactions with an electrolyte during a charge/discharge process. As a result, lifespan characteristics of lithium metal batteries including lithium metal deteriorate.
There is a need to develop methods for improving lifespan characteristics of lithium metal batteries including lithium metal.

SUMMARY

One or more embodiments include an anode for lithium metal batteries having a new structure.
One or more embodiments include a lithium metal battery including the anode having a new structure.
One or more embodiments include a method of manufacturing an anode for lithium metal batteries having a new structure.
Additional aspects will be set forth in part in the description which follows and, in part, will be apparent from the description, or may be learned by practice of the presented embodiments of the disclosure.
According to one or more embodiments, an anode for lithium metal batteries includes:

an anode current collector; and
a protective layer disposed on the anode current collector,
wherein an anode active material layer is disposed or absent between the anode current collector and the protective layer,
the protective layer includes sulfurized polyacrylonitrile (SPAN), and
the anode active material layer includes lithium metal or a lithium alloy.

According to one or more embodiments, a lithium metal battery includes:

a cathode; the above-described anode; and
an electrolyte disposed between the cathode and the anode.

According to one or more embodiments, a method of manufacturing an anode for lithium metal batteries includes:

providing an anode current collector or providing a stack structure in which an anode active material layer is disposed on the anode current collector; and
providing a protective layer on the anode current collector or on the anode active material layer,
wherein the protective layer includes sulfurized polyacrylonitrile (SPAN), and
the anode active material layer includes lithium metal or a lithium alloy.

BRIEF DESCRIPTION OF THE DRAWINGS

The above and other aspects, features, and advantages of certain embodiments of the disclosure will be more apparent from the following description taken in conjunction with the accompanying drawings, in which:

FIG. 1 is a cross-sectional view of an anode according to an embodiment.
FIG. 2 is a cross-sectional view of an anode according to another embodiment.
FIG. 3 is a cross-sectional view of an anode according to another embodiment.
FIG. 4 is a cross-sectional view of an anode according to another embodiment.
FIG. 5 is a schematic diagram of a lithium metal battery according to an embodiment.
FIG. 6 is a schematic diagram of a lithium metal battery according to an embodiment.
FIG. 7 is a schematic diagram of a lithium metal battery according to an embodiment.
FIG. 8 is a cross-sectional view of a lithium metal battery including a solid electrolyte layer, according to another embodiment.
FIG. 9 is a cross-sectional view of a lithium metal battery including a solid electrolyte layer, according to another embodiment.

DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

During charge/discharge processes of lithium metal batteries including lithium metal as an anode active material, a lithium-containing metal layer is plated and dissolved between an anode current collector and an electrolyte layer. As the charge/discharge process of a lithium metal battery is repeated, the lithium-containing metal layer includes impurities remaining in electrodes, decomposition products of an electrolyte, and the like. Therefore, the lithium-containing metal layer has a rough and hard surface by including the impurities. Lithium dendrites are formed on a lithium-containing metal layer having such a rough surface. These lithium dendrites may continuously grow during charge/discharge processes, thereby causing short circuits between a cathode and an anode.

Because an anode according to an embodiment has a new structure, formation of lithium dendrites is inhibited on an anode active material layer and short circuits are inhibited in a lithium metal battery including the anode, resulting in improvement of cycle characteristics.

The present inventive concept of the disclosure described below allows various changes and numerous embodiments, particular embodiments will be illustrated in the drawings and described in detail in the written description. However, this is not intended to limit the disclosure to particular modes of practice, and it is to be appreciated that all modifications, equivalents, and substitutes that do not depart from the spirit and technical scope of the disclosure are encompassed in the disclosure.

The terms used herein are merely used to describe particular embodiments and are not intended to limit the present inventive concept. An expression used in the singular encompasses the expression of the plural, unless it has a clearly different meaning in the context. In the present specification, it is to be understood that the terms such as "including" or "having," etc., are intended to indicate the existence of the features, numbers, operations, elements, parts, components, materials, or combinations thereof disclosed in the specification, and are not intended to preclude the possibility that one or more other features, numbers, operations, elements, parts, components, materials, or combinations thereof may exist or may be added. As used herein, the "/" may be interpreted as either "and" or "or" depending on situations.

In the drawings, thicknesses of various layers and regions may be enlarged or reduced for clarity. Throughout the specification, like reference numerals denote like elements. Throughout the specification, it will be understood that if one element such as layer, film, region, or plate, is referred to as being "on" another element, it may be directly on the other element, or intervening elements may also be present therebetween. Although the terms first, second, etc. may be used herein to describe various components, these components should not be limited by these terms. These terms are only used to distinguish one component from another. In this specification and drawings, components having substantially the same functional configuration are referred to by the same reference numerals, and redundant descriptions are omitted.

In the disclosure, a "particle diameter" of particles indicates an average diameter of spherical particles or an average length of major axes of non-spherical particles. Particle diameters of particles may be measured using a particle size analyzer (PSA). The "particle diameter" of particles is, for example, an average particle diameter. The average particle diameter is, for example, a median particle diameter (D50). The median particle diameter D50 is a particle diameter corresponding to a 50% cumulative volume calculated from the smallest particle in a particle size distribution measured, for example, by laser diffraction method.

In the disclosure, the term "metal" includes metals and metalloids such as silicon and germanium in an elemental or ionic state.

In the disclosure, the term "alloy" refers to a mixture of two or more metals.

In the disclosure, the term "cathode active material" refers to a material for cathodes allowing lithiation and delithiation.

In the disclosure, the term "anode active material" refers to a material for anodes allowing lithiation and delithiation.

In the disclosure, the terms "lithiation" and "lithiating" refer to a process of adding lithium to a cathode active material or an anode active material.

In the disclosure, the terms "delithiation" and "delithiating" refer to a process of removing lithium from a cathode active material or an anode active material.

In the disclosure, the terms "charging" and "charge" refer to a process of supplying electrochemical energy to a battery.

In the disclosure, the terms "discharging" and "discharge" refer to a process of removing electrochemical energy from a battery.

In the disclosure, the terms "cathode" and "positive electrode" refer to an electrode in which electrochemical reduction and lithiation occur during discharging.

In the disclosure, the terms "anode" and "negative electrode" refer to an electrode in which electrochemical oxidation and delithiation occur during discharging.

Hereinafter, an anode for lithium metal batteries, a lithium metal battery including the same, and a method of manufacturing the anode for lithium metal batteries will be described in more detail.

[Anode]

An anode for lithium metal batteries according to an embodiment includes: an anode current collector; and a protective layer disposed on the anode current collector, wherein an anode active material layer is disposed or absent between the anode current collector and the protective layer, the protective layer includes sulfurized polyacrylonitrile SPAN, and the anode active material layer includes lithium metal or a lithium alloy. The protective layer including sulfurized polyacrylonitrile may have reduced reactivity to an electrolyte. In the protective layer including sulfurized polyacrylonitrile. deterioration caused, for example, by the electrolyte may be inhibited. Side reactions between the protective layer including sulfurized polyacrylonitrile and the electrolyte, such as, electrolytic solution, may be inhibited. By disposing the protective layer including sulfurized polyacrylonitrile on the anode active material layer, side reactions between the anode active material layer and the electrolyte may be effectively prevented and inhibited. The protective layer including sulfurized polyacrylonitrile may effectively prevent formation and/or growth of lithium dendrites on the surface of an anode active material layer including a lithium metal. Stability is improved in an anode including the protective layer including sulfurized polyacrylonitrile and a lithium battery including the same, and cycle characteristics of the lithium battery are improved.

On the contrary, a protective layer including polyacrylonitrile PAN may have an increased reactivity to an electrolyte. Side reactions between the protective layer including polyacrylonitrile PAN and an electrolyte, such as an electrolytic solution, may significantly increase. Therefore, although the protective layer including polyacrylonitrile PAN is disposed on the anode active material layer, it may be difficult to effectively prevent or inhibit side reactions between the anode active material layer and the electrolyte. The protective layer including polyacrylonitrile PAN may not effectively inhibit formation and/or growth of lithium dendrites on the surface of the anode active material layer including a lithium metal. Stability of an anode and a lithium battery including the protective layer including polyacrylonitrile PAN may be reduced, thereby deteriorating cycle characteristics of the lithium battery.

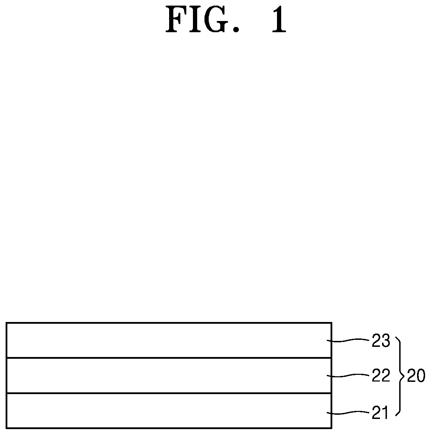

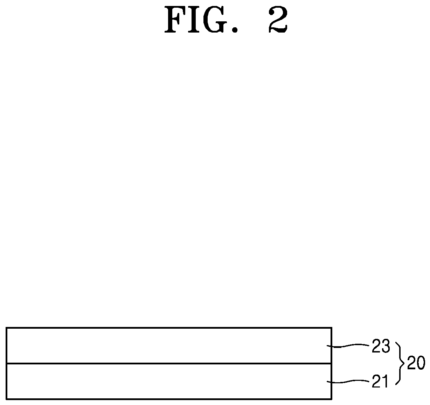

Referring to FIG. 1, an anode 20 includes: an anode current collector 21; a protective layer 23 disposed on the anode current collector 21; and an anode active material layer 22 disposed between the anode current collector 21 and the protective layer 23, wherein the protective layer 23 includes sulfurized polyacrylonitrile SPAN and the anode active material layer 22 includes lithium metal or a lithium alloy. Referring to FIG. 2, an anode 20 includes: an anode current collector 21; and a protective layer 23 disposed on the anode current collector 21, wherein an anode active material layer is absent between the anode current collector 21 and the protective layer 23, the protective layer 23 includes sulfurized polyacrylonitrile SPAN. Further, after charging, an anode active material layer may be disposed between the anode current collector 21 and the protective layer 23 and the anode active material layer includes lithium metal or a lithium alloy.

[Anode: Protective Layer]

Referring to FIGS. 1 to 4, the anode 20 includes: the anode current collector 21; and the protective layer 23 disposed on the anode current collector 21. The protective layer 23 includes sulfurized polyacrylonitrile SPAN. Because the protective layer 23 includes sulfurized polyacrylonitrile SPAN with low reactivity to the electrolyte, deterioration of the anode active material layer including the lithium metal may be prevented. Because sulfurized polyacrylonitrile has a three-dimensionally crosslinked fused ring structural stability may be improved. Because sulfurized polyacrylonitrile includes a number of nitrogen (N) atoms derived from a nitrile group, stability of the protective layer may be improved. For example, nitrogen atoms contained in sulfurized polyacrylonitrile react with lithium ions to form a lithium nitride such as $Li_3N$ during a charge/discharge process, and the lithium nitride may provide additional ionic conductivity to the protective layer.

Sulfurized polyacrylonitrile may be produced, for example, by heating a raw material powder mixture including sulfur powder and polyacrylonitrile powder in a sealed non-oxidizing atmosphere. While sulfur powder and polyacrylonitrile powder are heated, ring closure reaction in which polyacrylonitrile is three-dimensionally crosslinked to form a fused ring, e.g., a 6-membered ring, proceeds simultaneously with reaction between sulfur and polyacrylonitrile, thereby obtaining sulfurized polyacrylonitrile in which sulfur binds to the fused ring. For example, a plurality of sulfur atoms may be consecutively linked to constitute a part of the fused ring. For example, three or more sulfur atoms may be consecutively linked to constitute a part of the fused ring. The fused ring may include nitrogen.

For example, in an XRD spectrum sulfurized polyacrylonitrile using $CuK\alpha$ radiation, a peak of sulfur may disappear and only a peak with a broad portion at about 25° may be obtained in a diffraction angle (2θ) range of 20° to 30°.

For example, in a Raman spectrum of sulfurized polyacrylonitrile, a main peak may be observed at a Raman shift of about 1330 $cm^{-1}$, and minor peaks may be observed in a range of 200 $cm^{-1}$ to 2000 $cm^{-1}$ at around 1561 $cm^{-1}$, 1512 $cm^{-1}$, 1447 $cm^{-1}$, 1150 $cm^{-1}$, 996 $cm^{-1}$, 942 $cm^{-1}$, 802 $cm^{-1}$, 474 $cm^{-1}$, 391 $cm^{-1}$, 365 $cm^{-1}$, and 305 $cm^{-1}$. The peaks may exist within a range of ± 8 $cm^{-1}$ from a position of the peak. The main peak refers to a peak having a maximum peak height.

For example, sulfurized polyacrylonitrile may be in the form of particles. An average particle diameter of sulfurized polyacrylonitrile SPAN may be, for example, from 100 nm to 10 μm or from 500 nm to 10 μm. In the case where sulfurized polyacrylonitrile has an average particle diameter within the range described above, reactivity to the electrolytic solution may be more effectively inhibited.

An amount of sulfurized polyacrylonitrile may be, for example, from 1 to 99 wt%, from 10 wt% to 90 wt%, from 20 wt% to 80 wt%, from 20 wt% to 50 wt%, or from 30 wt% to 50 wt% based on a total weight of the protective layer. In the case where the protective layer includes sulfurized polyacrylonitrile in an amount within the ranges described above, cycle characteristics of a lithium battery including the protective layer may further be improved.

The protective layer 23 may further include $Li_2S$. $Li_2S$, for example, having an ionic conductivity of $1 \times 10^{-5}$ S/cm or more may provide additional ionic conductivity to the protective layer. $Li_2S$ may be derived from sulfurized polyacrylonitrile. $Li_2S$ may be produced, for example, by reaction between sulfurized polyacrylonitrile and lithium ions during a charge process of the lithium battery. By further including $Li_2S$, the protective layer may have an increased ionic conductivity.

The protective layer 23 may further include, for example, a binder. Because the protective layer includes sulfurized polyacrylonitrile and a binder, binding strength between sulfurized polyacrylonitrile molecules may further be increased. Because the protective layer includes a binder, the protective layer may constantly maintain a shape, mechanical strength of the protective layer may be improved, and the protective layer may prevent direct contact between the electrode and the anode active material layer more effectively.

The binder may be, for example, a non-conductive binder or a conductive binder. The conductive binder may be, for example, an ion conductive binder, an electron conductive binder, or a combination thereof.

The binder may be, for example, polystyrene sulfonate (PSS), polyvinylidene fluoride-hexafluoropropylene copolymer (PVDF-HFP), polyvinyl fluoride (PVF), poly vinylidene fluoride (PVDF), poly(methyl methacrylate) (PMMA), polyethylene oxide (PEO), polyethylene glycol (PEG), polyacrylonitrile (PAN), polytetrafluoroethylene (PTFE), polyethylene dioxythiophene (PEDOT), polypyrrole (PPY), polyaniline, polyacetylene, polytetrafluoroethylene (PTFE), styrene-butadiene rubber (SBR), polyimide (PI), polyamideimide (PAI), carboxymethylcellulose (CMC), polyvinyl chloride (PVC), polyacrylonitrile (PAN), modified polyphenylene oxide (PPO), polyethylene (PE), or polypropylene (PP), but is not limited thereto. The ion conductive binder may include a polar functional group. An ion conductive binder including a polar functional group may be, for example, Nation, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone), (SPAEK), poly[bis(benzimidazobenzisoquinolinones)] (SPBIBI), poly(styrene sulfonate) (PSS), or lithium 9,10-diphenylanthracene-2-sulfonate ($DPASLi^+$). The electron conductive binder may be, for example, polyacetylene, polythiophene, polypyrrole, poly(p-phenylene), poly(phenylenevinylene), poly(phenylenesulfide), or polyaniline.

The binder may be, for example, a fluorine-based binder. The fluorine-based binder included in the protective layer may be, for example, polyvinylidene fluoride (PVDF), polytetrafluoroethylene (PTFE), or polyvinylidene fluoride-hexafluoropropylene copolymer (PVDF-HFP).

An amount of the binder may be, for example, from 1 part by weight to 30 parts by weight, from 5 parts by weight to 30 parts by weight, or from 10 parts by weight to 30 parts by weight based on 100 parts by weight of the sulfurized polyacrylonitrile. The amount of the binder contained in the protective layer may be, for example, from 1 wt% to 25 wt% or 5 wt% to 20 wt% based on the total weight of the protective layer. In the case where the amount of the binder contained in the protective layer is within the ranges described above, cycle characteristics of a lithium battery including the protective layer may further be improved.

For example, the protective layer 23 may further include a metal oxide. For example, the protective layer may include both (e.g., simultaneously) the sulfurized polyacrylonitrile SPAN (e.g., in the form of SPAN particles) and a metal oxide (e.g., in the form of metal oxide particles). The protective layer including both the sulfurized polyacrylonitrile SPAN and the metal oxide is, for example, an organic/inorganic composite protective layer. In the case where the protective layer further includes a metal oxide, strength and/or elasticity of the protective layer may be improved. Because durability of the protective layer is improved, precipitation and/or growth of lithium dendrites may be more effectively prevented in an interface between the protective layer and the anode active material layer. Cycle characteristics of a lithium battery including the protective layer may further be improved.

For example, the metal oxide may be in the form of particles. A shape of the metal oxide is not particularly limited. Metal oxide particles may include, for example, spherical particles, plate-like particles, acicular particles, or any combination thereof. The metal oxide particles may have, for example, a non-uniform shape. An average particle diameter of the metal oxide may be, for example, from 100 nm to 2 $\mu$m, from 200 nm to 1 $\mu$m, or from 400 nm to 1 $\mu$m. Because the particle diameter of the metal oxide is within the ranges described above, cycle characteristics of a lithium battery including the protective layer may further be improved. The metal oxide may be, for example, porous or non-porous. The metal oxide may be, for example, crystalline or amorphous.

For example, the metal oxide may include $Nb_2O_5$, $TiO_2$, $Al_2O_3$, $SiO_2$, $BaTiOs$, metal organic framework (MOF), polyhedral oligomeric silsesquioxanes (POSS), $Li_2CO_3$, $Li_3PO_4$, $Li_2O$, montmorillonite, $ZrO_2$, $CeO_2$, $Mn_3O_4$ or any combination thereof, but is not limited thereto and any metal oxides commonly available in the art may also be used.

The metal oxide may have, for example, lithiophilicity. The metal oxide having lithiophilicity may react with lithium ions during a charge/discharge process of a lithium battery. The metal oxide may include, for example, a pseudo-capacitive oxide reacting with lithium to form a lithium metal oxide. The pseudo-capacitive oxide may be, for example, $Nb_2O_5$ and $TiO_2$. The $Nb_2O_5$ may have, for example, an orthorhombic crystal structure. For example, the $Nb_2O_5$ may react with lithium ions during a charge/discharge process of a lithium battery to form $Li_xNb_2O_5$ (where 0<x<1). The pseudo-capacitive oxide serving as a pseudo capacitor may play a role in storing and/or dispersing lithium in the protective layer. By including the pseudo-capacitive oxide, the protective layer may have improved lithium ion conductivity and prevent localization of lithium.

An amount of the metal oxide may be, for example, from 5 parts by weight to 60 parts by weight, from 10 parts by weight to 50 parts by weight, from 10 parts by weight to 40 parts by weight, or from 10 parts by weight to 30 parts by weight based on 100 parts by weight of the sulfurized polyacrylonitrile. The amount of the metal oxide contained in the protective layer may be, for example, from 1 wt% to 40 wt%, from 5 wt% to 30 wt%, or from 5 wt% to 20 wt% based on the total weight of the protective layer. In the case where the amount of the metal oxide contained in the protective layer is within the ranges described above, cycle characteristics of a lithium battery including the protective layer may further be improved.

The protective layer 23 may further include a carbonaceous material. The protective layer 23 may include, for example, sulfurized polyacrylonitrile SPAN (e.g., in the form of SPAN particles) and a carbonaceous material. The protective layer 23 may include, for example, sulfurized polyacrylonitrile SPAN, a metal oxide, and a carbonaceous material (in the form of carbonaceous particles, e.g., carbon particles, e.g., amorphous carbon particles). Because the protective layer further includes the carbonaceous material, dispersion of the sulfurized polyacrylonitrile and/or the metal oxide may further be improved. Therefore, local precipitation and/or growth of lithium dendrites may be more effectively prevented in an interface between the protective layer and the anode active material layer. The carbonaceous material may act as a carbonaceous dispersant. The carbonaceous material may be, for example, a carbonaceous conductive material. Because the protective layer includes the carbonaceous material, internal resistance of the protective layer may decrease and the protective layer may have conductivity. The carbonaceous material may be, for example, amorphous carbon. Because the protective layer includes amorphous carbon, lithium ions may move more quickly through the surface of amorphous carbon than through the inside of the protective layer. The carbonaceous material may be, for example, porous or non-porous. The carbonaceous material may be, for example in the form of particles. The carbonaceous material may include, for example, spherical particles, plate-like particles, acicular particles, or any combination thereof. The particles of the carbonaceous material may have, for example, a non-uniform shape. An average particle diameter of the carbonaceous material may be for example, from 10 nm to 500 nm, from 10 nm to 300 nm, from 10 nm to 200 nm, from 10 nm to 100 nm, from 10 nm to 50 nm, from 30 nm to 50 nm, or from 40 nm to 50 nm. In the case where the carbonaceous material has the particle diameter within the above-described ranges, cycle characteristics of a lithium battery including the protective layer may further be improved. The particle diameter of the carbonaceous material may be measured, for example, by a laser diffraction method, a scanning electron microscope, a transmission electron microscope, or an atomic force microscope.

The carbonaceous material may include, for example, carbon black, acetylene black, Denka black, Ketjen black, carbon nanotube, carbon nanofiber, carbon nanobelts, graphene, graphene oxide, fullerene, activated carbon, carbon fiber, or any combination thereof, but is not limited thereto, and any materials commonly available as carbonaceous materials in the art may also be used.

An amount of the carbonaceous material may be, for example, from 10 parts by weight to 100 parts by weight, from 30 parts by weight to 100 parts by weight, from 50 parts by weight to 100 parts by weight, or from 70 parts by weight to 90 parts by weight based on 100 parts by weight of the sulfurized polyacrylonitrile. The amount of the carbonaceous material may be, for example, from 1 wt% to 50 wt%, from 10 wt% to 50 wt%, or from 20 wt% to 40 wt% based on the total weight of the protective layer. In the case where the amount of the carbonaceous material contained in the protective layer is within the above-described ranges, cycle characteristics of a lithium battery including the protective layer may further be improved.

For example, the protective layer 23 may include 5 parts by weight to 40 parts by weight of the metal oxide and 50 to 100 parts by weight of the carbonaceous material based on 100 parts by weight of the sulfurized polyacrylonitrile. In the case where the protective layer includes the above-described composition, cycle characteristics of a lithium battery including the protective layer may further be improved.

The protective layer 23 may have, for example, a thickness of 1 $\mu$m to 50 $\mu$m, 3 $\mu$m to 20 $\mu$m, 5 $\mu$m to 20 $\mu$m, or 7 $\mu$m to 15 $\mu$m, but the thickness is not necessarily limited thereto and may vary according to required type, capacity, and the like of the lithium battery. A too thin protective layer cannot perform the function of the protective layer. A too thick protective layer may cause an increase in internal resistance and thus energy density of the lithium battery may deteriorate.

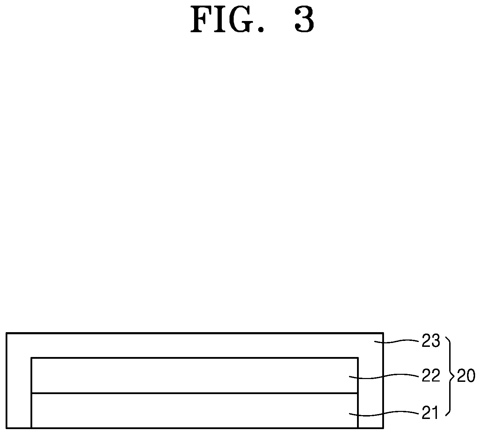

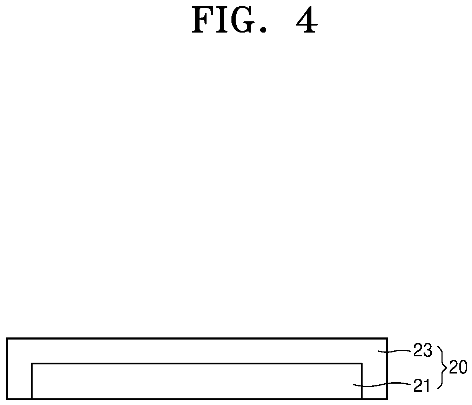

Referring to FIGS. 3 and 4, the protective layer 23 may be additionally disposed on side surfaces of the anode active material layer 22 and/or the anode current collector 21.

Referring to FIG. 3, the anode 20 includes: an anode current collector 21; a protective layer 23 disposed on the anode current collector 21; and an anode active material layer 22 disposed between the anode current collector 21 and the protective layer 23, wherein the protective layer 23 includes sulfurized polyacrylonitrile SPAN, the anode active material layer 22 includes lithium metal or a lithium alloy, and the protective layer 23 is disposed to extend to at least one side surface of the anode active material layer 22 and/or the anode current collector 21. The protective layer 23 completely covers the anode active material layer 22 and extends to the side surfaces of the anode current collector 21. The protective layer 23 may completely cover the side surfaces of the anode active material layer 22 and/or the anode current collector 21. Because the protective layer 23 extends to at least one side surface of the anode active material layer 22 and/or the anode current collector 21, the anode active material layer 22 may be protected more effectively.

Referring to FIG. 4, the anode 20 includes an anode current collector 21; and a protective layer 23 disposed on the anode current collector 21, wherein the protective layer 23 includes sulfurized polyacrylonitrile SPAN, and the protective layer 23 is disposed to extend to at least one side surface of the anode current collector 21. The protective layer 23 is disposed to extend to the side surfaces of the anode current collector 21. The protective layer 23 may completely cover the side surfaces of the anode current collector 21. Because the protective layer 23 extends to at least one side surface of the anode current collector 21, a lithium metal layer plated between the protective layer 23 and the anode current collector 21 may be more effectively protected.

[Anode: Anode Active Material Layer]

Referring to FIGS. 1 and 3, the anode 20 for lithium metal batteries includes: the anode current collector 21; the protective layer 23 disposed on the anode current collector 21; and the anode active material layer 22 disposed between the anode current collector 21 and the protective layer 23, wherein the anode active material layer 22 includes lithium metal or a lithium alloy.

The anode active material layer 22 may include, for example, lithium foil, lithium powder, or any combination thereof. The lithium foil may include, for example, lithium metal foil, lithium alloy foil, or any combination thereof. The lithium powder may include lithium metal powder, lithium alloy powder or any combination thereof. The lithium alloy is an alloy of lithium and a metal alloyable with lithium, for example, a lithium-silver alloy, a lithium-zinc alloy, a lithium-magnesium alloy, or a lithium-tin alloy. The anode active material layer including the lithium metal foil may be, for example, a lithium metal layer. The anode active material layer including the lithium alloy foil may be, for example, a lithium alloy layer. The anode active material layer including lithium metal powder and/or lithium alloy powder may be applied to the anode current collector by coating a slurry including lithium powder and a binder thereon. The binder may be a fluorine-based binder, such as polyvinylidene fluoride (PVDF). The anode active material layer may not include the carbonaceous anode active material. Therefore, the anode active material layer may be formed of a metal-based anode active material.

A thickness of the lithium foil may be, for example, from 1 $\mu$m to 50 $\mu$m, from 1 $\mu$m to 30 $\mu$m, from 10 $\mu$m to 30 $\mu$m, or from 10 $\mu$m to 80 $\mu$m. Because the thickness of the lithium foil is within the ranges described above, lifespan characteristics of a lithium battery including the protective layer may further be improved. A particle diameter of the lithium powder may be, for example from 0.1 $\mu$m to 3 $\mu$m, from 0.1 $\mu$m to 2 $\mu$m, or from 0.1 $\mu$m to 2 $\mu$m. Because the thickness of the lithium powder is within the ranges described above, lifespan characteristics of the lithium battery including the protective layer may further be improved.

For example, a thickness of the anode active material layer 22 may be from 0.1 $\mu$m to 100 $\mu$m, from 0.1 $\mu$m to 80 $\mu$m, from 1 $\mu$m to 80 $\mu$m, or from 10 $\mu$m to 80 $\mu$m, but is not limited thereto and may be adjusted according to required types, capacity, and the like of the lithium battery.

Referring to FIGS. 2 and 4, the anode active material layer is not disposed between the anode current collector 21 and the protective layer 23 in the anode 20. In the anode 20 in which the anode active material layer is not disposed, lithium metal is plated between the anode current collector 21 and the protective layer 23 by charging after the lithium metal is introduced into the lithium battery together with the cathode and the electrolyte. As a result, the anode 20 includes the anode active material layer. The anode active material layer may be a plated lithium layer.

[Anode: Anode Current Collector]

Referring to FIGS. 1 to 4, the anode 20 for lithium metal batteries includes the anode current collector 21.

The anode current collector 21 may include, for example, a first metal substrate. The first metal substrate includes a first metal as a main component or may consist of the first metal. An amount of the first metal contained in the first metal substrate may be, for example, 90 wt% or more, 95 wt% or more, 99 wt% or more, or 99.9 wt% or more based on a total weight of the first metal substrate. The first metal substrate may be formed of, for example, a material that does not react with lithium, i.e., a material that does not form an alloy and/or compound with lithium. The first metal may be, for example, copper (Cu), nickel (Ni), stainless steel (SUS), iron (Fe), and cobalt (Co), but is not necessarily limited thereto, and any materials commonly available in the art as current collectors may also be used. The first metal substrate may be formed of, for example, one metal selected from those described above or an alloy of two or more metals. The first metal substrate may be, for example, in the form of a sheet or foil. A thickness of the anode current collector 21 may be, for example, from 5 $\mu$m to 50 $\mu$m, from 10 $\mu$m to 50 $\mu$m, from 10 $\mu$m to 40 $\mu$m, or from 10 $\mu$m to 30 $\mu$m, but is not particularly limited thereto and may be selected according to required properties of the lithium battery.

The anode current collector 21 may further include a coating layer (not shown) including a second metal and formed on the first metal substrate.

For example, the anode current collector 21 may include the first metal substrate and the coating layer disposed on the first metal substrate and including the second metal. The second metal has a higher Mohs hardness than that of the first metal. That is, because the coating layer including the second metal is harder than the substrate including the first metal, deterioration of the first metal substrate may be prevented. A Mohs hardness of material constituting the first metal substrate may be, for example, 5.5 or less. The Mohs hardness of the first metal may have, for example, a Mohs hardness of 5.5 or less, 5.0 or less, 4.5 or less, 4.0 or less, 3.5 or less, or 3.0 or less. The Mohs hardness of the first metal may be, for example, from 2.0 to 6.0. The coating layer includes the second metal. For example, the coating layer may include the second metal as a main component or consist of the second metal. An amount of the second metal contained in the coating layer may be, for example, 90 wt% or more, 95 wt% or more, 99 wt% or more, or 99.9 wt% or more based on a total weigh of the coating layer. The coating layer may be formed of, for example, a material that does not react with lithium, i.e., a material that does not form an alloy and/or compound with lithium. The Mohs hardness of the material constituting the coating layer is, for example, 6.0 or more. For example, the Mohs hardness of the second metal may be 6.0 or more, 6.5 or more, 7.0 or more, 7.5 or more, 8.0 or more, 8.5 or more, or 9.0 or more. The Mohs hardness of the second metal may be, for example, from 6.0 to 12. In the case where the Mohs hardness of the second metal is too low, deterioration of the anode current collector may not be inhibited. In the case where the Mohs hardness of the second metal is too high, processing may not be easy. For example, the second metal may include at least one selected from titanium (Ti), manganese (Mn), niobium (Nb), tantalum (Ta), iridium (Ir), vanadium (V), rhenium (Re), osmium (Os), tungsten (W), chromium (Cr), boron (B), ruthenium (Ru), and rhodium (Rh). The coating layer may be formed of, for example, one of the metals described above or an alloy of at least two metals selected therefrom. A Mohs hardness different between the first metal included in the first metal substrate and the second metal included in the coating layer may be, for example, 2 or more, 2.5 or more, 3 or more, 3.5 or more, or 4 or more. Because the Mohs hardness difference between the first metal and the second metal is within the ranges described above, deterioration of the anode current collector may be more effectively inhibited. The coating layer may have a single-layer structure or a multilayer structure including two or more layers. For example, the coating layer may have a double-layer structure including a first coating layer and a second coating layer. For example, the coating layer may have a triple-layer structure including a first coating layer, a second coating layer, and a third coating layer. A thickness of the coating layer may be, for example, from 10 nm to 1 $\mu$m, from 50 nm to 500 nm, from 50 nm to 200 nm, or from 50m to 150 nm. In the case where the coating layer is too thin, it may be difficult to inhibit non-uniform growth of the lithium-containing metal layer. As the thickness of the coating layer increases, cycle characteristics of the lithium battery are improved. However, in the case where the coating layer is too thick, energy density of the lithium battery decreases and formation of the coating layer may not be easy. The coating layer may be disposed on the first metal substrate by, for example, vacuum deposition, sputtering, or plating, but the method is not limited thereto and any method of forming the coating layer commonly used in the art may also be used.

Although not shown in the drawings, the anode current collector 21 may include, for example, a base film and a metal layer disposed on one side or both sides of the base film. The base film may include, for example, a polymer. The polymer may be, for example, a thermoplastic polymer. The polymer may be, for example, polyethyleneterephthalate (PET), polyethylene (PE), polypropylene (PP), polybutyleneterephthalate (PBT), polyimide (PI), or any combination thereof. The polymer may be an insulating polymer. Because the base film includes an insulating thermoplastic polymer, the base film is softened or liquefied to block the operation of a battery in the case of occurrence of a short circuit, so that a rapid current increase may be inhibited. The metal layer may include, for example, copper (Cu), stainless steel, titanium (Ti), iron (Fe), cobalt (Co), nickel (Ni), or an alloy thereof. The metal layer may correspond to, for example, the first metal substrate. The metal layer may further include a coating layer including the second metal. The anode current collector 21 may further include a metal chip and/or a lead tab. For more detailed descriptions of the base film, the metal layer, the metal chip, and the lead tab of the anode current collector 21, refer to the cathode current collector. Because the anode current collector 21 has the above-described structure, the weight of the anode may be reduced, and accordingly, energy density of the anode and the lithium battery may be increased.

[Anode: Anode Interlayer]

Referring to FIGS. 1 and 3, the anode 20 for lithium metal batteries may optionally further include an anode interlayer (not shown) disposed between the protective layer 23 and the anode active material layer 22. Referring to FIGS. 2 and 4, the anode 20 may optionally further include an anode interlayer (not shown) disposed between the protective layer 23 and the anode current collector 21. Because the anode 20 further includes the anode interlayer, formation or growth of lithium dendrites may be more effectively inhibited in the anode 20. The anode interlayer may be omitted.

The anode interlayer may include, for example, an anode active material and a binder. The anode active material is an anode material allowing lithiation and delithiation. The anode active material contained in the anode interlayer may be, for example, in the form of particles. The anode active material in the form of particles may have an average particle diameter of, for example, 10 nm to 4 $\mu$m, 10 nm to 1 $\mu$m, 10 nm to 500 nm, 10 nm to 100 nm, or 20 nm to 80 nm. Because the average particle diameter of the anode active material is within the ranges described above, reversible plating and/or dissolution of lithium may occur more easily during a charge/discharge process. The average particle diameter of the anode active material is, for example, a median diameter D50 measured using a laser particle size analyzer.

The anode active material contained in the anode interlayer may include, for example, at least one of a carbonaceous anode active material and a metal or metalloid anode active material. The carbonaceous anode active material may be, for example, amorphous carbon. The carbonaceous anode active material is, for example, carbon black (CB), acetylene black (AB), furnace black (FB), Ketjen black (KB), and graphene, but is not limited thereto and any carbonaceous materials classified into amorphous carbon may also be used. Amorphous carbon is carbon that does not have crystallinity or has very low crystallinity and is distinguished from crystalline carbon or graphite-based carbon. The metal or metalloid anode active material includes at least one selected from gold (Au), platinum (Pt), palladium (Pd), silicon (Si), silver (Ag), aluminum (Al), bismuth (Bi), tin (Sn), and zinc (Zn), but is not limited thereto, and any known metal anode active materials or metalloid anode active materials capable of forming an alloy or compound with lithium may also be used. For example, because nickel (Ni) does not form an alloy with lithium, Ni is not a metal anode active material. The anode interlayer may include one of these anode active materials or a mixture of a plurality of different anode active materials. The anode interlayer may include, for example, a mixture of amorphous carbon with at least one of gold (Au), platinum (Pt), palladium (Pd), silicon (Si), silver (Ag), aluminum (Al), bismuth (Bi), tin (Sn), and zinc (Zn). A mixing ratio of the mixture may be, for example, from 10:1 to 1:2, from 10:1 to 1:1, from 7:1 to 1:1, from 5:1 to 1:1, or from 4:1 to 2:1. For example, the anode active material included in the anode interlayer may include a mixture of first particles formed of amorphous carbon and second particles formed of a metal or metalloid. The metal includes, for example, gold (Au), platinum (Pt), palladium (Pd), silicon (Si), silver (Ag), aluminum (Al), bismuth (Bi), tin (Sn), and zinc (Zn). An amount of the second particles may be from 8 wt% to 60 wt%, from 10 wt% to 50wt%, from 15 wt% to 40 wt%, or from 20 wt% to 30 wt% based on a total weight of the mixture. In the case where the amount of the second particles is within the ranges described above, cycle characteristics of the lithium battery may further be improved.

The binder included in the anode interlayer may be, for example, styrene butadiene rubber (SBR), polytetrafluoroethylene, polyvinylidene fluoride, polyethylene, a vinylidene fluoride/hexafluoropropylene copolymer, polyacrylonitrile, or polymethylmethacrylate, but is not limited thereto, and any binders commonly available in the art may also be used. The binder may be used alone or in combination of a plurality of different binders. In the case where the anode interlayer does not include a binder, the anode interlayer may be easily separated from the protective layer 23 or the anode current collector 21. An amount of the binder included in the anode interlayer is, for example, from 1 wt% to 20 wt% based on a total weight of the anode interlayer.

A thickness of the anode interlayer may be, for example, from 1 $\mu$m to 20 $\mu$m, from 1 $\mu$m to 15 $\mu$m, from 2 $\mu$m to 10 $\mu$m, or from 3 $\mu$m to 7 $\mu$m. The thickness of the anode interlayer may be, for example, from 1 % to 50 %, from 1 % to 30 %, from 1 % to 10 %, or from 1 % to 5 % based on a thickness of the cathode active material layer. In the case where the anode interlayer is too thin, lithium dendrites formed between the anode interlayer and the anode current collector disintegrate the anode interlayer, making it difficult to improve cycle characteristics of the lithium battery. In the case where the anode interlayer is too thick, energy density of the lithium battery including the anode 20 decreases, making it difficult to improve cycle characteristics of thereof. As the thickness of the anode interlayer decreases, for example, a charging capacity of the anode interlayer also decreases. The charging capacity of the anode interlayer may be, for example, from 0.1 % to 50 %, from 1 % to 30 %, from 1 % to 10 %, from 1 % to 5 %, or from 1 % to 2 % based on a total charging capacity. In the case where the charging capacity of the anode interlayer is too low, lithium dendrites formed between the anode interlayer and the anode current collector disintegrate the anode interlayer making it difficult to improve cycle characteristics of the lithium battery. In the case where the charging capacity of the anode interlayer is too high, energy density of the lithium battery including the anode 20 decreases, making it difficult to improve cycle characteristics. The charging capacity of the cathode active material layer is obtained by multiplying a charging capacity density (mAh/g) of the cathode active material by a mass of the cathode active material of the cathode active material layer. If various types of cathode active materials are used, charging capacity density$\times$mass values for all of the cathode active materials are calculated respectively, and a sum of the values is regarded as the charging capacity of the cathode active material layer. The charging capacity of the anode interlayer is calculated in the same manner. That is, the charging capacity of the anode interlayer is obtained by multiplying a charging capacity density (mAh/g) of the anode active material by a mass of the anode active material of the anode interlayer. If various types of anode active materials are used, charging capacity density$\times$mass values for all of the anode active materials are respectively calculated and a sum of the values is regarded as the charging capacity of the anode interlayer. In this case, the charging capacity densities of the cathode active material and the anode active material are capacities estimated using all-solid half-cells to which lithium metal is applied as a counter electrode. The charging capacities of the cathode active material layer and the anode interlayer are directly measured using the all-solid half-cells. The charging capacity density is calculated by dividing the measured charging capacity by the mass of each active material. Alternatively, a charging capacity of the cathode active material layer and the anode interlayer may be initial charging capacity measured during charging of a first cycle.

[Lithium Metal Battery]

A lithium metal battery according to an embodiment includes: a cathode; the above-described anode; and an electrolyte disposed between the cathode and the anode, wherein the anode includes lithium metal or a lithium alloy. The lithium metal battery may have increased capacity and excellent lifespan characteristics by including the above-described anode. The lithium metal battery may be, for example, a lithium primary battery, a lithium secondary battery, a lithium-sulfur battery, or a lithium-air battery, but is not limited thereto, and any lithium metal batteries commonly available in the art may also be used.

Although the lithium metal battery is prepared, for example, by the following exemplary method, the method is not limited thereto and may be adjusted according to required conditions.

(Anode)

The above-described anode including lithium metal or a lithium alloy is prepared.

(Cathode)

First, a cathode active material composition is prepared by mixing a cathode active material, a conductive material, a binder, and a solvent. The prepared cathode active material composition is directly coated on an aluminum current collector and dried to prepare a cathode plate on which the cathode active material layer is formed. Alternatively, a cathode plate on which a cathode active material layer is formed is prepared by casting the cathode active material composition on a separate support and laminating a film separated from the support on an aluminum current collector.

The cathode active material may be any lithium-containing metal oxide commonly used in the art without limitation. For example, the cathode active material may include at least one composite oxide of lithium and a metal selected from cobalt, manganese, nickel, and any combination thereof, and examples thereof may be a compound represented by one of the following formulae: $Li_aA_{1-b}B_bD_2$ (where $0.90 \leq a \leq 1$ and $0 \leq b \leq 0.5$); $Li_aE_{1-b}B_bO_{2-c}D_c$ (where $0.90 \leq a \leq 1$, $0 \leq b \leq 0.5$ and $0 \leq c \leq 0.05$); $LiE_{2-b}B_bO_{4-c}D_c$ (where $0 \leq b \leq 0.5$ and $0 \leq c \leq 0.05$); $Li_aNi_{1-b-c}Co_bB_cD_\alpha$ (where $0.90 \leq a \leq 1$, $0 \leq b \leq 0.5$, $0 \leq c \leq 0.05$ and $0 < \alpha \leq 2$); $Li_aNi_{1-b-c}Co_bB_cO_{2-\alpha}F_\alpha$ (where $0.90 \leq a \leq 1$, $0 \leq b \leq 0.5$, $0 \leq c \leq 0.05$ and $0 < \alpha < 2$); $Li_aNi_{1-b-c}Co_bB_cO_{2-\alpha}F_2$ (where $0.90 \leq a \leq 1$, $0 \leq b \leq 0.5$, $0 \leq c \leq 0.05$ and $0 < \alpha < 2$); $Li_aNi_{1-b-c}Mn_bB_cD_\alpha$ (where $0.90 \leq a \leq 1$, $0 \leq b \leq 0.5$, $0 \leq c \leq 0.05$ and $0 < \alpha < 2$); $Li_aNi_{1-b-c}Mn_bB_cO_{2-\alpha}F_\alpha$ (where $0.90 \leq a \leq 1$, $0 \leq b \leq 0.5$, $0 \leq c \leq 0.05$ and $0 < \alpha < 2$); $Li_aNi_{1-b-c}Mn_bB_cO_{2-\alpha}F_2$ (where $0.90 \leq a \leq 1$, $0 \leq b \leq 0.5$, $0 \leq c \leq 0.05$ and $0 < \alpha < 2$); $Li_aNi_bE_cG_dO_2$ (where $0.90 \leq a \leq 1$, $0 \leq b \leq 0.9$, $0 \leq c \leq 0.5$ and $0.001 \leq d \leq 0.1$); $Li_aNi_bCo_cMn_dGeO_2$ (where $0.90 \leq a \leq 1$, $0 \leq b \leq 0.9$, $0 \leq c \leq 0.5$, $0 \leq d \leq 0.5$ and $0.001 \leq e \leq 0.1$); $Li_aNiG_bO_2$ (where $0.90 \leq a \leq 1$ and $0.001 \leq b \leq 0.1$); $Li_aCoG_bO_2$ (where $0.90 \leq a \leq 1$ and $0.001 \leq b \leq 0.1$); $Li_aMnG_bO_2$ (where $0.90 \leq a \leq 1$ and $0.001 \leq b \leq 0.1$); $Li_aMn_2G_bO_4$ (where $0.90 \leq a \leq 1$ and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ (where $0 \leq f \leq 2$); $Li_{(3-f)}Fe_2(PO_4)_3$ (where $0 \leq f \leq 2$); and $LiFePO_4$.

In the formulae representing compounds above, A is Ni, Co, Mn, or any combination thereof; B is Al, Ni, Co, Mn, Cr, Fe, Mg, Sr, V, a rare earth element, or any combination thereof; D is O, F, S, P, or any combination thereof; E is Co, Mn, or any combination thereof; F is F, S, P, or any combination thereof; G is Al, Cr, Mn, Fe, Mg, La, Ce, Sr, V, or any combination thereof; Q is Ti, Mo, Mn, or any combination thereof; I is Cr, V, Fe, Sc, Y, or any combination thereof; and J is V, Cr, Mn, Co, Ni, Cu, or any combination thereof. The above-described compound having a coating layer on the surface thereof may be used or a mixture of the above-described compound and a compound having a coating layer may also be used. The coating layer added to the surface of the compound includes, for example, a compound of a coating element such as an oxide, hydroxide, oxyhydroxide, oxycarbonate, or hydroxycarbonate of the coating element. The compound constituting the coating layer is amorphous or crystalline. The coating element included in the coating layer may be Mg, Al, Co, K, Na, Ca, Si, Ti, V, Sn, Ge, Ga, B, As, Zr or any mixture thereof. A method of forming the coating layer is selected from those not adversely affect physical properties of the cathode active material. The coating methods is, for example, spray coating and dip coating. These methods are obvious to those of ordinary skill in the art, and thus detailed descriptions thereof will not be given.

The cathode active material may be, for example, $Li_aNi_xCo_yM_zO_{2-b}A_b$ (where $1.0 \leq a \leq 1.2$, $0 \leq b \leq 0.2$, $0.8 \leq x < 1$, $0 < y \leq 0.3$, $0 < z \leq 0.3$, $x+y+z=1$, M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or any combination thereof, and A is F, S, Cl, Br, or any combination thereof), $LiNi_xCo_yMn_zO_2$ (where $0.8 \leq x \leq 0.95$, $0 \leq y \leq 0.2$, $0 < z \leq 0.2$ and $x+y+z=1$), $LiNi_xCo_yAl_zO_2$ (where $0.8 \leq x \leq 0.95$, $0 \leq y \leq 0.2$, $0 < z \leq 0.2$, and $x+y+z=1$), $LiNi_xCo_yMn_zAl_wO_2$ (where $0.8 \leq x \leq 0.95$, $0 \leq y \leq 0.2$, $0 < z \leq 0.2$, $0 < w \leq 0.2$, and $x+y+z+w=1$), $Li_aCo_xM_yO_{2-b}A_b$ (where $1.0 \leq a \leq 1.2$, $0 \leq b \leq 0.2$, $0.9 \leq x \leq 1$, $0 \leq y \leq 0.1$, $x+y=1$, M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or any combination thereof, and A is F, S, Cl, Br, or any combination thereof), $Li_aNi_xMn_yM'_zO_{2-b}A_b$ (where $1.0 \leq a \leq 1.2$, $0 \leq b \leq 0.2$, $0 < x \leq 0.3$, $0.5 \leq y < 1$, $0 < z \leq 0.3$, $x+y+z=1$, M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or any combination thereof, and A is F, S, Cl, Br, or any combination thereof), $Li_aM1_xM2_yPO_{4-b}X_b$ (where $0.90 \leq a \leq 1.1$, $0 \leq x \leq 0.9$, $0 \leq y \leq 0.5$, $0.9 < x+y < 1.1$, $0 \leq b \leq 2$, M1 is chromium (Cr), manganese (Mn), iron (Fe), cobalt (Co), nickel (Ni), copper (Cu), zirconium (Zr), or any combination thereof, M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or any combination thereof, and X is O, F, S, P, or any combination thereof), or $Li_aM3_zPO_4$ (where $0.90 \leq a \leq 1.1$, $0.9 \leq z \leq 1.1$, and M3 is chromium (Cr), manganese (Mn), iron (Fe), cobalt (Co), nickel (Ni), copper (Cu), zirconium (Zr), or any combination thereof).

The conductive material may be carbon black, graphite particulates, natural graphite, artificial graphite, acetylene black, Ketjen black, carbon fiber; carbon nanotubes; metal such as copper, nickel, aluminum, and silver each of which is used in powder, fiber, or tube form; or conductive polymers such as polyphenylene derivatives, but is not limited thereto and any material commonly used in the art as conductive materials may also be used. Alternatively, the cathode may not include a separate conductive material.

The binder may be a vinylidene fluoride/hexafluoropropylene copolymer, polyvinylidene fluoride, polyacrylonitrile, polymethylmethacrylate, polytetrafluoroethylene (PTFE), a mixture thereof, or a styrene butadiene rubber polymer. The solvent may be N-methylpyrrolidone (NMP), acetone, and water, but is not limited thereto and any solvent commonly used in the art may also be used.

A plasticizer or a pore forming agent may further be added to the cathode active material composition to form pores inside the electrode plate.

Amounts of the cathode active material, the conductive material, the binder, and the solvent may be the same levels as those commonly used in lithium batteries. At least one of the conductive material, the binder, and the solvent may be omitted in accordance with a use and a configuration of the lithium battery.

An amount of the binder included in the cathode may be, for example, from 0.1 wt% to 10 wt% or from 0.1 wt% to 5 wt% based on a total weight of the cathode active material layer. An amount of the cathode active material included in the cathode may be, for example, from 80 wt% to 99 wt%, from 90 wt% to 99 wt%, or from 95 wt% to 99 wt% based on the total weight of the cathode active material layer.

The cathode current collector may be formed of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or any alloy thereof in the form of a plate, foil, or the like. The cathode current collector may have a thickness of, for example, 1 $\mu$m to 100 $\mu$m, 1 $\mu$m to 50 $\mu$m, 5 $\mu$m to 25 $\mu$m, or 10 $\mu$m to 20 $\mu$m.

The cathode current collector may include, for example, a base film and a metal layer disposed on one side or both sides of the base film. The base film may include, for example, a polymer. The polymer may be, for example, a thermoplastic polymer. The polymer may be, for example, polyethyleneterephthalate (PET), polyethylene (PE), polypropylene (PP), polybutyleneterephthalate (PBT), polyimide (PI), or any combination thereof. The polymer may be an insulator. Because the base film includes an insulating thermoplastic polymer, the base film is softened or liquefied to block the operation of a battery in the case of occurrence of a short circuit, so that a rapid current increase may be inhibited. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or any alloy thereof. The metal layer acts as an electrochemical fuse and is cut by an overcurrent, thereby preventing a short circuit. By controlling a thickness of the metal layer, a limiting current and a maximum current may be adjusted. The metal layer may be plated or deposited on the base film. As the thickness of the metal layer decreases, the limiting current and/or maximum current of the cathode current collector decrease, so that stability of the lithium battery may be improved in the case of a short circuit. A lead tab may be added onto the metal layer for connection with the outside. The lead tab may be welded to the metal layer or a metal layer/base film stack structure by ultrasonic welding, laser welding, spot welding, and the like. While the base film and/or the metal layer melts during welding, the metal layer may be electrically connected to the lead tab. A metal chip may further be added between the metal layer and the lead tab for stronger welding between the metal layer and the lead tab. The metal chip may be a chip of the same material as the metal of the metal layer. The metal chip may be, for example, metal foil and metal mesh. The metal chip may be, for example, aluminum foil, copper foil, and SUS foil. By performing welding after disposing the metal chip on the metal layer, the lead tab may be welded to the metal chip/metal layer stack structure or the metal chip/metal layer/base film stack structure. While the base film, the metal layer, and/or the metal chip melt during welding, the metal layer or metal layer/metal chip stack structure may be electrically connected to the lead tab. A metal chip and/or a lead tab may further be added to the metal layer. The base film may have a thickness of, for example, 1 $\mu$m to 50 $\mu$m, 1.5 $\mu$m to 50 $\mu$m, 1.5 $\mu$m to 40 $\mu$m, or 1 to 30 $\mu$m. With the thickness of the base film within the above-described ranges, the weight of the electrode assembly may be more effectively reduced. A melting point of the base film may be, for example, from 100 °C to 300 °C, from 100 °C to 250 °C, or from 100 °C to 200 °C. Because the base film has a melting point within the above-described ranges, the base film melts during a process of welding the lead tab to be easily bound to the lead tab. To improve adhesion between the base film and the metal layer, surface treatment such as corona treatment may be performed on the base film. The thickness of the metal layer may be, for example, from 0.01 $\mu$m to 3 $\mu$m, from 0.1 $\mu$m to 3 $\mu$m, from 0.1 $\mu$m to 2 $\mu$m, or from 0.1 $\mu$m to 1 $\mu$m. With the thickness of the metal layer within the above-described ranges, stability of the electrode assembly may be obtained while maintaining conductivity thereof. The thickness of the metal chip may be, for example, from 2 $\mu$m to 10 $\mu$m, from 2 $\mu$m to 7 $\mu$m, or from 4 $\mu$m to 6 $\mu$m. With the thickness of the metal chip within the above-described ranges, the metal layer may be more easily connected to the lead tab. Because the cathode current collector has the above-described structure, the weight of the cathode may be reduced, so that energy density of the cathode and the lithium battery may be increased.

(Separator)

Subsequently, a separator to be inserted between the positive electrode and the negative electrode is prepared.

Any separator commonly used in the art for lithium batteries may be used. For example, any separator having low resistance to ion migration of the electrolyte and excellent electrolyte-retaining ability may be used. For example, the separator is selected from glass fiber, polyester, Teflon, polyethylene, polypropylene, polytetrafluoroethylene (PTFE), or any combination thereof, each of which is a non-woven or woven fabric. For example, a windable separator such as polyethylene or polypropylene may be used in lithium-ion batteries and a separator having excellent organic electrolyte-retaining ability may be used in lithium-ion polymer batteries.

The separator is prepared according to the following exemplary method. However, the method is not limited thereto and adjusted according to required conditions.

First, a polymer resin, a filler, and a solvent are mixed to prepare a separator composition. The separator composition is directly coated on an electrode and dried to prepare a separator. Alternatively, the separator composition is cast on a support and dried and then a separator film separated from the support is laminated on an electrode to form a separator.

The polymer used to prepare the separator is not particularly limited and any polymer commonly used as a binder for electrode plates may also be used. For example, a vinylidene fluoride/hexafluoropropylene copolymer, polyvinylidenefluoride (PVDF), polyacrylonitrile, polymethylmethacrylate, or any mixture thereof may be used.

(Electrolyte)

Subsequently, an electrolyte is prepared. The electrolyte may be, for example, a liquid electrolyte, a solid electrolyte, a gel electrolyte or any combination thereof. For example, the electrolyte may be an organic electrolytic solution. The electrolytic solution is prepared, for example, by dissolving a lithium salt in an organic solvent.

Any organic solvent commonly used in the art may be used. For example, the organic solvent is propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, $\gamma$-butyrolactone, dioxorane, 4-methyldioxorane, N,N-dimethyl formamide, dimethyl acetamide, dimethylsulfoxide, dioxane, 1,2-dimethoxyethane, sulfolane, dichloroethane, chlorobenzene, nitrobenzene, diethylene glycol, dimethyl ether, or any mixture thereof.

The lithium salt may also be any lithium salt commonly used in the art. For example, the lithium salt is $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (where $1 \leq x \leq 20$ and $1 \leq y \leq 20$), LiCl, LiI, or any mixture thereof. A concentration of the lithium salt is, for example, from 0.1 M to 5.0 M.

The solid electrolyte may be, for example, an oxide-based solid electrolyte, a sulfide-based solid electrolyte, a polymer solid electrolyte or any combination thereof.

The solid electrolyte may be, for example, an oxide-based solid electrolyte. The oxide-based solid electrolyte may include, for example, at least one selected from $Li_{1+x+y}Al_xTi_{2-x}Si_yP_{3-y}O_{12}$ (where $0<x<2$ and $0\leq y<3$), $BaTiO_3$, $Pb(Zr,Ti)Os$ (PZT), $Pb_{1-x}La_xZr_{1-y}Ti_yO_3$ (PLZT, where $0\leq x<1$ and $0\leq y<1$), $PB(Mg_3Nb_{2/3})O_3-PbTiO_3$ (PMN-PT), $HfO_2$, $SrTiOs$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ (where $0<x<2$ and $0<y<3$), $Li_xAl_yTi_z(PO_4)_3$ (where $0<x<2$, $0<y<1$, and $0<z<3$), $Li_{1+x+y}(Al, Ga)_x(Ti, Ge)_{2-x}Si_yP_{3-y}O_{12}$ (where $0\leq x\leq 1$ and $0\leq y\leq 1$), $Li_xLa_yTiO_3$ (where $0<x<2$ and $0<y<3$), $Li_2O$, $LiOH$, $Li_2CO_3$, $LiAlO_2$, $Li_2O-Al_2O_3-SiO_2-P_2O_5-TiO_2-GeO_2$, and $Li_{3+x}La_3M_2O_{12}$ (where M = Te, Nb, or Zr, and x is an integer from 1 to 10). The solid electrolyte is manufactured by a sintering method, or the like. For example, the oxide-based solid electrolyte is a garnet-type solid electrolyte selected from $Li_7La_3Zr_2O_{12}$ (LLZO) and $Li_{3+x}La_3Zr_{2-a}M_aO_{12}$ (M doped LLZO, where M=Ga, W, Nb, Ta, or Al and x is an integer from 1 to 10).

For example, the sulfide-based solid electrolyte may include at least one selected from lithium sulfide, silicon sulfide, phosphorous sulfide, boron sulfide, or any combination thereof. The sulfide-based solid electrolyte particles may include $Li_2S$, $P_2S_5$, $SiS_2$, $GeS_2$, $B_2S_3$ or any combination thereof. The sulfide-based solid electrolyte particles may be $Li_2S$ or $P_2S_5$. Sulfide-based solid electrolyte particles are known to have higher lithium ion conductivity than other inorganic compounds. For example, the sulfide-based solid electrolyte includes $Li_2S$ and $P_2S_5$. In the case where a sulfide solid electrolyte material constituting the sulfide-based solid electrolyte includes $Li_2S-P_2S_5$, a mixing molar ratio of $Li_2S$ to $P_2S_5$ may be, for example, in the range of 50:50 to 90:10. In addition, an inorganic solid electrolyte prepared by adding $Li_3PO_4$, a halogen, a halogen compound, $Li_{2+2x}Zn_{1-x}GeO_4$ ("LISICON", where $0\leq x<1$), $Li_{3+y}PO_{4-x}N_x$ ("LIPON", where $0<x<4$ and $0<y<3$), $Li_{3.25}Ge_{0.25}P_{0.75}S_4$ ("Thio-LISICON"), $Li_2O-Al_2O_3-TiO_2-P_2O_5$ ("LATP"), or the like to an inorganic solid electrolyte such as $Li_2S-P_2S_5$, $SiS_2$, $GeS_2$, $B_2S_3$, or any combination thereof may be used as a sulfide-based solid electrolyte. Examples of the sulfide-based solid electrolyte material may include, but are not limited to, $Li_2S-P_2S_5$; $Li_2S-P_2S_5$-LiX (where X is a halogen atom); $Li_2S-P_2S_5-Li_2O$; $Li_2S-P_2S_5-Li_2O-LiI$; $Li_2S-SiS_2$; $Li_2S-SiS_2-LiI$; $Li_2S-SiS_2-LiBr$; $Li_2S-SiS_2-LiCl$; $Li_2S-SiS_2-B_2S_3-LiI$; $Li_2S-SiS_2-P_2S_5-LiI$; $Li_2S-B_2S_3$; $Li_2S-P_2S_5-Z_mS_n$ (where $0<m<10$, $0<n<10$, and Z=Ge, Zn or Ga); $Li_2S-GeS_2$; $Li_2S-SiS_2-Li_3PO_4$; and $Li_2S-SiS_2-Li_pMO_q$ (where $0<p<10$, $0<q<10$, and M is P, Si, Ge, B, Al, Ga, or In). In this regard, the sulfide-based solid electrolyte material may be manufactured by treating starting materials (e.g., $Li_2S$ and $P_2S_5$) of the sulfide-based solid electrolyte by a melt quenching method, a mechanical milling method, or the like. Also, a calcination process may further be performed after the above process. The sulfide-based solid electrolyte may be in an amorphous or crystalline form or in a mixed form thereof.

The polymer solid electrolyte may include, for example, a mixture of a lithium salt and a polymer or a polymer having an ion-conductive functional group. The polymer solid electrolyte may be, for example, a polymer electrolyte in a solid state at 25 °C and 1 atm. For example, the polymer solid electrolyte may not include a liquid. The polymer solid electrolyte includes a polymer, and examples of the polymer include polyethyleneoxide (PEO), polyvinylidenefluoride (PVDF), vinylidene fluoride-hexafluoropropylene (PVDF-HFP), poly(styrene-b-ethylene oxide) block copolymer (PS-PEO), poly(styrene-butadiene), poly(styrene-isoprene-styrene), poly(styrene-b-divinylbenzene) block copolymer, poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyaniline, polyacetylene, Nafion, Aquivion, Flemion, Gore, Aciplex, Morgane ADP), sulfonated poly(ether ether ketone) (SPEEK), sulfonated poly(arylene ether ketone ketone sulfone) (SPAEKKS), sulfonated poly(aryl ether ketone (SPAEK), poly[bis(benzimidazobenzisoquinolinones)] (SPBIBI), poly(styrene sulfonate) (PSS), lithium 9,10-diphenylanthracene-2-sulfonate (DPASLi+), or any combination thereof. However, the embodiment is not limited thereto, and any polymer electrolytes commonly available in the art may also be used. Any lithium salts commonly available in the art may also be used. Examples of the lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x}+1SO_2)(C_yF_{2y}+1SO_2)$ (where x and y are each independently from 1 to 20), LiCl, Lil, or any mixture thereof. The polymer included in the polymer solid electrolyte may be, for example, a compound including 10 or more, 20 or more, 50 or more, or 100 or more repeating units. A weight average molecular weight of the polymer included in the polymer solid electrolyte may be, for example, 1000 Dalton (Da) or more, 10,000 Da or more, 100,000 Da or more, or 1,000,000 Da or more.

The gel electrolyte is, for example, a polymer gel electrolyte. For example, the gel electrolyte may have a gel state without including a polymer.

The polymer gel electrolyte may include, for example, a liquid electrolyte and a polymer, or an organic solvent and a polymer having an ion-conductive functional group. The polymer gel electrolyte may be, for example, a polymer electrolyte in a gel state at 25 °C and 1 atm. The polymer gel electrolyte may have, for example, a gel state without including a liquid. The liquid electrolyte used in the polymer gel electrolyte may be, for example, a mixture of an ionic liquid, a lithium salt, and an organic solvent; a mixture of a lithium salt and an organic solvent; a mixture of an ionic liquid and an organic solvent; or a mixture of a lithium salt, an ionic liquid, and an organic solvent. The polymer used in the polymer gel electrolyte may be selected from polymers used in the polymer solid electrolyte. The organic solvent may be selected from organic solvents used in liquid electrolytes. The lithium salt may be selected from lithium salts used in polymer solid electrolyte. The ionic liquid refers to a salt in a liquid state, and a molten salt at room temperature composed solely of ions and having a melting point below room temperature. The ionic liquid may include, for example, at least one compound including a) at least one cation selected from ammonium, pyrimidium, pyridinium, imidazolium, piperidinium, pyrazolium, oxazolium, pyridazinium, phosphonium, sulfonium, triazole, and any mixture thereof, and b) at least one anion selected from $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $BF_4^-$, $SO_4^{2-}$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$. For example, the polymer solid electrolyte may be impregnated with a liquid electrolyte in a secondary battery to form a polymer gel electrolyte. The polymer gel electrolyte may further include inorganic particles. The polymer included in the polymer gel electrolyte may be a compound including, for example, 10 or more, 20 or more, 50 or more, or 100 or more repeating units. A weight average molecular weight of the polymer included in the polymer gel electrolyte may be, for example, 500 Da or more, 1000 Da or more, 10,000 Da or more, 100,000 Da or more, or 1,000,000 Da or more.

(Lithium Metal Battery)

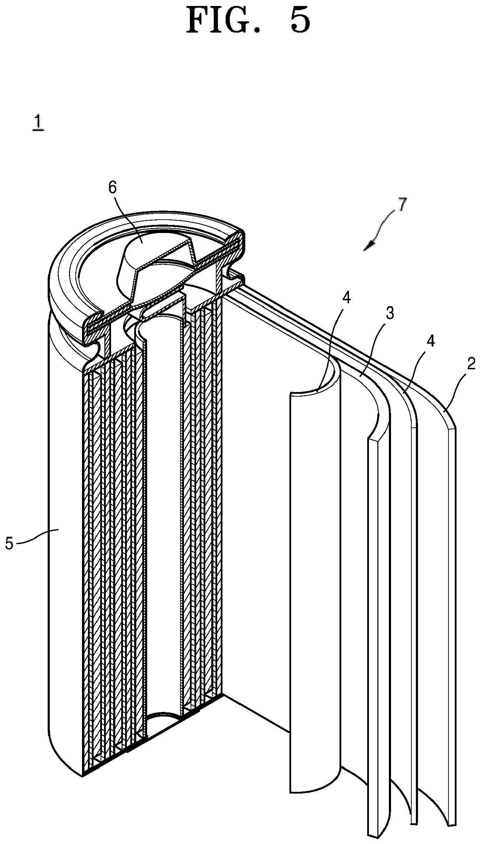

Referring to FIG. 5, a lithium metal battery 1 according to an embodiment includes a cathode 3, the above-described anode 2, and a separator 4. The cathode 3, the anode 2, and the separator 4 are wound or folded to form a battery assembly 7. The formed battery assembly 7 is accommodated in a battery case 5. An organic electrolytic solution is injected into the battery case 5 and the battery case 5 is sealed with a cap assembly 6 to complete preparation of the lithium metal battery 1. The battery case 5 may be a cylindrical type, but is not limited thereto and, for example, a rectangular type or a thin film type may also be used.

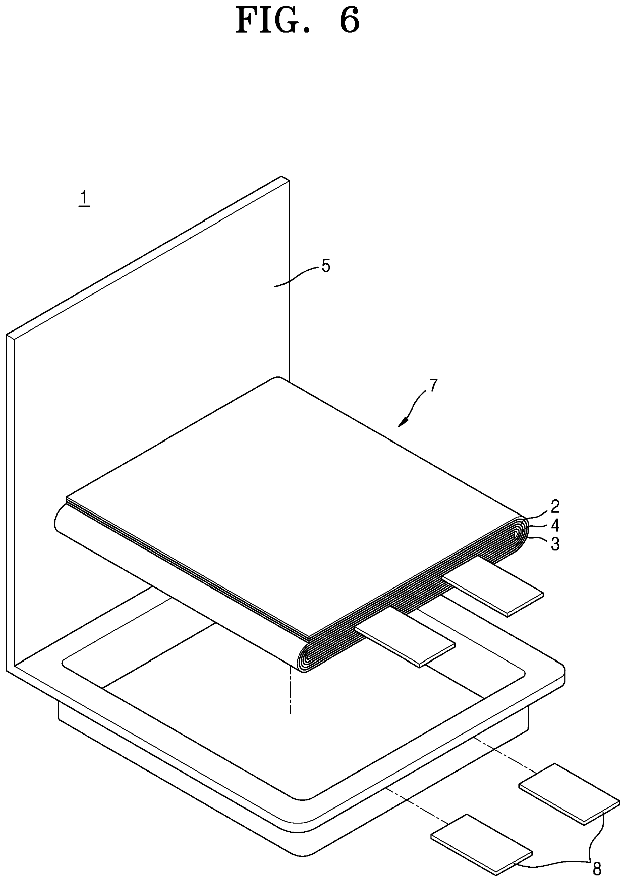

Referring to FIG. 6, a lithium metal battery 1 according to an embodiment includes a cathode 3, the above-described anode 2, and a separator 4. The separator 4 is disposed between the cathode 3 and the anode 2, and the cathode 3, the anode 2, and the separator 4 are wound or folded to form a battery assembly 7. The formed battery assembly 7 is accommodated in a battery case 5. The lithium metal battery 1 may include an electrode tab 8 serving as an electrical passage for inducing a current generated in the battery assembly 7 to the outside. An organic electrolytic solution is injected into the battery case 5 and the battery case 5 is sealed to complete preparation of the lithium battery 1. The battery case 5 may be a rectangular type, but is not limited thereto, and for example, a cylindrical type or a thin film type may also be used.

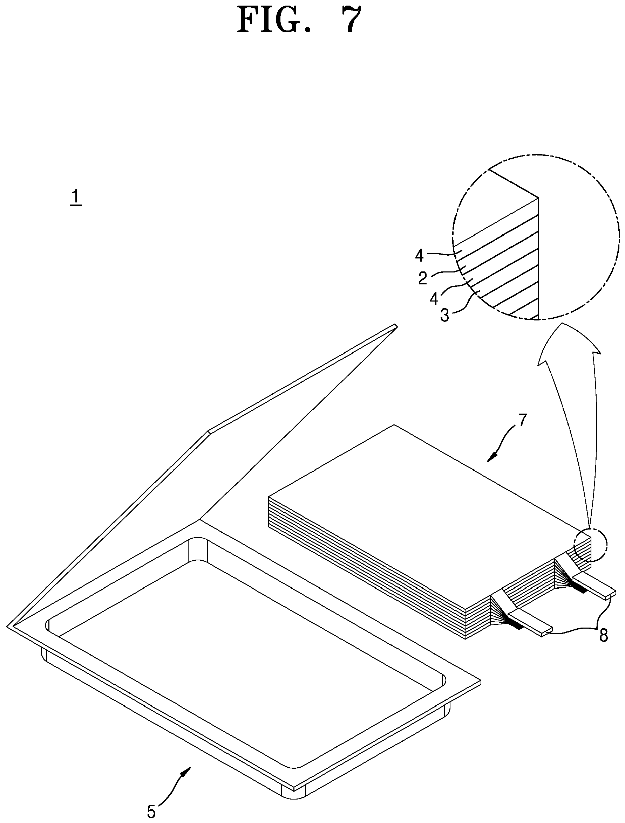

Referring to FIG. 7, a lithium metal battery 1 according to an embodiment includes a cathode 3, the above-described anode 2, and a separator 4. The separator 4 is disposed between the cathode 3 and the anode 2 to form a battery assembly. The battery assembly 7 is stacked in a bi-cell structure and accommodated in a battery case 5. The lithium metal battery 1 may include an electrode tab 8 serving as an electrical passage for inducing a current generated in the battery assembly 7 to the outside. An organic electrolytic solution is injected into the battery case 5 and the battery case 5 is sealed to complete preparation of the lithium metal battery 1. The battery case 5 may be a rectangular type, ,

but is not limited thereto, and for example, a cylindrical type or a thin film type may also be used.

In a pouch-type lithium metal battery, a pouch may be used as the battery case of the lithium metal batteries shown in FIGS. 5 to 7. A pouch-type lithium metal battery includes at least one battery assembly. The separator is disposed between the cathode and the anode to form a battery assembly. The battery assembly is stacked in a bi-cell structure, impregnated with an organic electrolytic solution, accommodated in a pouch, and sealed to complete preparation of the pouch-type lithium metal battery. For example, although not shown in the drawings, the above-described cathode, anode and separator may be simply stacked in a battery assembly and accommodated in a pouch. Alternatively, the cathode, the anode, and the separator may be wound in a jelly-roll form or folded in a battery assembly and accommodated in a pouch. Subsequently, an organic electrolytic solution is injected into the pouch and the pouch is sealed to complete preparation of the lithium battery.

Because the lithium metal batteries according to the disclosure has high discharging capacity, excellent lifespan characteristics, and high energy density, the lithium metal batteries may be used, for example, in electric vehicles (EVs). For example, lithium metal batteries are used in hybrid vehicles such as plug-in hybrid electric vehicles (PHEVs). In addition, lithium metal batteries may be used in the fields requiring a large amount of power storage. For example, lithium metal batteries may be used in E-bikes and electric tools.

A plurality of lithium metal batteries may be stacked to form a battery module, and a plurality of battery modules constitutes a battery pack. Such battery packs may be used in any device that requires high capacity and high output. For example, battery packs may be used in laptop computers, smart phones, and electric vehicles. For example, a battery module includes a plurality of batteries and a frame holding the batteries. The battery pack may include, for example, a plurality of battery modules and a bus bar connecting the battery modules. The battery module and/or the battery pack may further include a cooling device. The plurality of battery packs are controlled by a battery management system. The battery management system includes a battery pack, and a battery control device connected to the battery pack.

Hereinafter, a lithium metal battery including a solid electrolyte will be described in more detail.

(All-solid Lithium Metal Battery)

The lithium metal battery may be, for example, an all-solid lithium metal battery including a solid electrolyte. An all-solid lithium metal battery may have both improved capacity and excellent lifespan characteristics by including the above-described anode .

Although the all-solid lithium metal battery is prepared, for example, by the following exemplary method, the method is not limited thereto and may be adjusted according to required conditions.

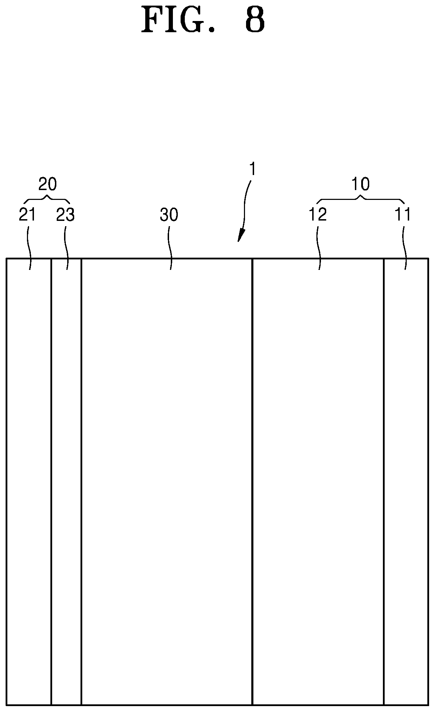

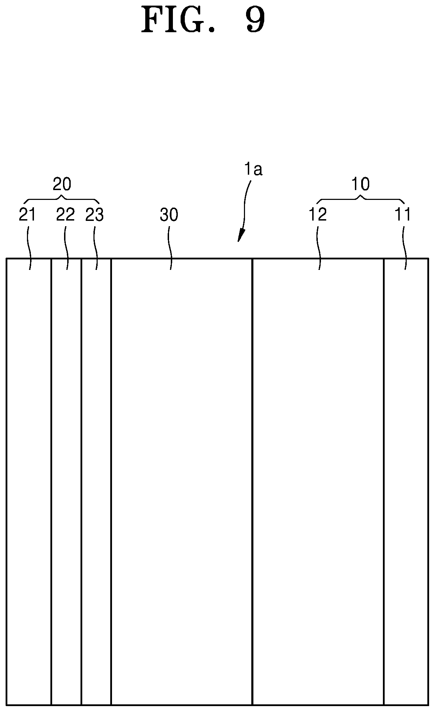

Referring to FIGS. 8 and 9, an all-solid lithium metal battery 1 includes a cathode 10, the above-described anode 20, and a solid electrolyte layer 30 disposed between the cathode 10 and the anode 20. The solid electrolyte layer 30 includes, for example, an inorganic solid electrolyte. The solid electrolyte 30 may be, for example, a sulfide-based solid electrolyte or an oxide-based solid electrolyte.

(Anode)

The above-described anode including lithium metal or a lithium alloy is prepared.

(Cathode)

Referring to FIGS. 8 and 9, the cathode 10 includes a cathode current collector 11 and a cathode active material layer 12 disposed on the cathode current collector 11. The cathode active material layer 12 includes a cathode active material. For the cathode active material, refer to the above-described lithium battery.

The cathode active material layer 12 may further include a solid electrolyte in addition to the cathode active material. The solid electrolyte included in the cathode 10 may be the same as or different from the solid electrolyte included in the solid electrolyte layer 30. For detailed descriptions of the solid electrolyte included in the cathode 10, refer to the solid electrolyte layer 30 described above. The solid electrolyte used in the cathode active material layer 12 may have a smaller average particle diameter D50 than that of the solid electrolyte used in the solid electrolyte layer 30. For example, the average particle diameter D50 of the solid electrolyte used in the cathode active material layer 12 may be 90% or less, 80% or less, 70% or less, 60% or less, 50% or less, 40% or less, 30% or less, or 20% or less of the average particle diameter D50 of the solid electrolyte used in the solid electrolyte layer 30. The average particle diameter D50 of the solid electrolyte used in the cathode active material layer 12 may be, for example, from 0.1 $\mu$m to 2 $\mu$m, from 0.2 $\mu$m to 1.5 $\mu$m, or from 0.3 $\mu$m to 1.0 $\mu$m. An amount of the solid electrolyte included in the cathode active material layer 12 may be from 1 wt% to 15 wt%, from 5 wt% to 15 wt%, or from 8.0 wt% to 12.0 wt% based on a total weight of the cathode active material layer 12.

The cathode active material layer 12 may include a binder. The binder may be styrene butadiene rubber (SBR), polytetrafluoroethylene, polyvinylidene fluoride, or polyethylene, but is not limited thereto and any binders commonly available in the art may also be used. An amount of the binder included in the cathode active material layer 12 may be, for example, from 0.1 wt% to 5 wt%, from 0.5 wt% to 3 wt%, or from 1.0 wt% to 2.0 wt% based on a total weight of the cathode active material layer 12.

The cathode active material layer 12 may include a conductive material. The conductive material may be, for example, a carbonaceous conductive material or a metallic conductive material. The conductive material may be, for example, graphite, carbon black, acetylene black, Ketjen black, carbon fiber, carbon tube, or metal powder, but is not limited thereto, and any conductive materials commonly available in the art may also be used. An amount of the conductive material included in the cathode active material layer 12 may be, for example, from 0.1 wt% to 10 wt%, from 0.5 wt% to 5 wt%, or from 1.0 wt% to 4.0 wt% based on the total weight of the cathode active material layer 12. The cathode active material layer 12 may further include, for example, a filler, a coating agent, a dispersant, and an ion-conductive adjuvant in addition to the cathode active material, the solid electrolyte, the binder, and the conductive material.

The cathode current collector 11 may be, for example, in the form of a plate or a foil formed of aluminum (Al), indium (In), copper (Cu), magnesium (Mg), stainless steel, titanium (Ti), iron (Fe), cobalt (Co), nickel (Ni), zinc (Zn), germanium (Ge), lithium (Li), or an alloy thereof. The cathode current collector 11 may be omitted. The cathode current collector 11 may further include a carbon layer disposed on one side or both sides of a metal substrate. By additionally disposing the carbon layer on the metal substrate, corrosion of the metal of the metal substrate caused by the solid electrolyte included in the cathode layer may be prevented and interfacial resistance between the cathode active material layer 12 and the cathode current collector 11 may be reduced. A thickness of the carbon layer may be, for example, from 1 $\mu$m to 5 $\mu$m, from 1 $\mu$m to 4 $\mu$m, or from 1 $\mu$m to 3 $\mu$m. In the case where the thickness of the carbon layer is too small, it may be difficult to completely prevent contact between the metal substrate and the solid electrolyte. In the case where the thickness of the carbon layer is too large, energy density of an all-solid secondary battery may decrease. The carbon layer may include amorphous carbon, crystalline carbon, and the like. A thickness of the cathode current collector 11 including a metal substrate and, optionally, a carbon layer may be, for example, from 10 $\mu$m to 50 $\mu$m, from 10 $\mu$m to 40 $\mu$m, or from 10 $\mu$m to 30 $\mu$m, but is not limited thereto, and may vary according to required characteristics of the all-solid lithium battery.

Although not shown in the drawings, the cathode 10 may include the cathode current collector 11 and the cathode active material layer 12 disposed on the cathode current collector 11 and may further include an inactive member disposed on side of the cathode active material layer 12. An area of the cathode active material layer 12 may be smaller than an area of the solid electrolyte layer 30 in contact with the cathode active material layer 12. Because the inactive member is arranged to surround side surfaces of the cathode active material layer 12, an area error between the cathode active material layer 12 and the solid electrolyte layer 30 may be corrected. The inactive member is a member not including an electrochemically active material, e.g., an electrode active material. The electrode active material is a material that allows intercalation/deintercalation of lithium. The inactive member is formed of a material commonly used in the art, other than the electrode active material. The inactive member may be in contact with the solid electrolyte layer 30 in a state surrounding side surfaces of the cathode active material layer 12. Because the inactive member is in contact with the solid electrolyte layer 30 while surrounding side surfaces of the cathode active material layer 12, cracks of the solid electrolyte layer 30 caused by a pressure difference during a press-applying process in a portion of the solid electrolyte layer 30 not in contact with the cathode active material layer 12 may be effectively inhibited. Because the difference between the area of the cathode active material layer 12 and the area of the solid electrolyte layer 30 is corrected by the inactive member, cracks of the solid electrolyte layer 30 caused by a pressure difference during a pressing process may be effectively inhibited. The inactive member may be disposed between the cathode current collector 11 and the solid electrolyte layer 30 facing each other. The inactive member may serve as a filler filling a space between the cathode current collector 11 and the solid electrolyte layer 30 facing each other. The inactive member may include at least one selected from a lithium-ion insulator and a lithium-ion conductor. The inactive member may be an electronic insulator. That is, the inactive member may not be an electronic conductor. The inactive member may be an organic material, an inorganic material, or an organic/inorganic composite material. The organic material may be, for example, a polymer. The inorganic material may be, for example, a ceramic such as a metal oxide. The organic/inorganic composite material may be a composite of a polymer and a metal oxide. The inactive member may include, for example, at least one selected from an insulating polymer, an ion-conductive polymer, an insulating inorganic material, an oxide-based solid electrolyte, and a sulfide-based solid electrolyte. The inactive member may be, for example, an olefin-based polymer such as polypropylene (PP) and polyethylene (PE). The inactive member may be, for example, a gasket. The thickness of the inactive member may be the same as or similar to the thickness of the cathode active material layer 12.

(Solid Electrolyte Layer)

Referring to FIGS. 8 and 9, a solid electrolyte layer 30 is disposed between the cathode 10 and the anode 20 and includes, for example, a sulfide-based solid electrolyte.

The sulfide-based solid electrolyte may include, for example, at least one selected from $Li_2S-P_2S_5$, $Li_2S-P_2S_5-LiX$ (where X is a halogen atom) $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (where m and n are positive numbers, and Z is Ge, Zn, or Ga), $Li_2S-GeS_2$, $Li_2S-SiS_2-Li_3PO_4$, $Li_2S-SiS_2-Li_pMO_q$ (where p and q are positive numbers and M is P, Si, Ge, B, Al, Ga, or In), $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). The sulfide-based solid electrolyte may be prepared by treating a starting material such as $Li_2S$ and $P_2S_5$ by melt quenching or mechanical milling. In addition, heat treatment may be performed after such treatment. The solid electrolyte may be in an amorphous state, a crystalline state, or a mixed state thereof. In addition, the solid electrolyte may include, for example, sulfur (S), phosphorus (P), and lithium (Li) as components among materials of the above-described sulfide-based solid electrolytes. For example, the solid electrolyte may be a material including $Li_2S-P_2S_5$. In the case where the material including $Li_2S-P_2S_5$ is used as the sulfide-based solid electrolyte material constituting the solid electrolyte, a mixing molar ratio of $Li_2S$ to $P_2S_5$ may be, for example, from 50:50 to 90:10.

The sulfide-based solid electrolyte may include, for example, an argyrodite type solid electrolyte represented by Formula 1 below:

$$<\text{Formula 1}> \qquad Li^+_{12-n-x}A^{n+}X^{2-}_{6-x}Y^-_x$$

In Formula 1, A is P, As, Ge, Ga, Sb, Si, Sn, Al, In, Ti, V, Nb, or Ta, X is S, Se, or Te, and Y is Cl, Br, I, F, CN, OCN, SCN, or $N_3$, where $1 \leq n \leq 5$ and $0 \leq x \leq 2$. The sulfide-based solid electrolyte may be an argyrodite-type compound including, for example, at least one selected from $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). The sulfide-based solid electrolyte may be an argyrodite-type compound including, for example, at least one selected from $Li_6PS_5Cl$, $Li_6PS_5Br$, and LiSPSsl. The argyrodite-type solid electrolyte may have a density of 1.5 g/cc to 2.0 g/cc. Because the argyrodite-type solid electrolyte has a density of 1.5 g/cc or more, internal resistance of the all-solid secondary battery may be reduced and penetration of the solid electrolyte layer may be effectively inhibited.

The sulfide-based solid electrolyte may have, for example, an elastic modulus, i.e., Young's modulus, of 35 GPa or less, 30 GPa or less, 27 GPa or less, 25 GPa or less, or 23 GPa or less. The sulfide-based solid electrolyte may have, for example, an elastic modulus, i.e., Young's modulus, of 10 GPa to 35 GPa, 10 GPa to 30 GPa, 10 GPa to 27 GPa, 10 GPa to 25 GPa, or 10 GPa to 23 GPa. Because the sulfide-based solid electrolyte has the elastic modulus within the ranges described above, temperature and/or pressure required for sintering decrease, and thus sintering of the solid electrolyte may be more easily performed.

The solid electrolyte used in the solid electrolyte layer 30 may have an average particle diameter D50 of, for example, 1 μm to 10 μm, 1.5 μm to 7 μm, or 2 μm to 5 μm.

An amount of the sulfide-based solid electrolyte included in the solid electrolyte layer 30 may be, for example, from 97 wt% to 100 wt%, from 98 wt% to 99.9 wt%, or from 98.5 wt% to 99.0 wt% based on a total weight of the solid electrolyte layer 30.

For example, the solid electrolyte layer 30 may further include a binder. The binder included in the solid electrolyte layers 30 may be, for example, styrene butadiene rubber (SBR), polytetrafluoroethylene, polyvinylidene fluoride, and polyethylene. However, the binder is not limited thereto and any compound commonly used in the art as a binder may also be used. The binder of the solid electrolyte layer 30 may be the same as or different from the binders included in the cathode active material layer 12 and the anode active material layer 22.

An amount of the binder included in the solid electrolyte layer 30 may be, for example, from 0.1 wt% to 3 wt%, from 0.5 wt% to 2 wt%, or from 1.0 wt% to 2.0 wt% based in a total weight of the solid electrolyte layer 30.

Referring to FIGS. 8 and 9, the all-solid lithium metal battery 1 includes a solid electrolyte layer 30, a cathode layer 10 disposed on one side of the solid electrolyte layer 30, and an anode layer 20 disposed on the other side of the solid electrolyte layer 30. The cathode layer 10 includes a cathode active material layer 12 in contact with the solid electrolyte layer 30 and a cathode current collector 11 in contact with the cathode active material layer 12. The anode layer 20 includes a protective layer 23, the protective layer 23 in contact with the solid electrolyte layer 30 and the protective 23 in contact with the anode active material layer 22. Alternatively, the anode layer 20 includes an anode active material layer 22 and an protective layer 23, the protective layer 23 in contact with the solid electrolyte layer 30 and an anode current collector 21 in contact with the anode active material layer 22. For example, the all-solid lithium metal battery 1 may be prepared by disposing the cathode active material layer 12 and the protective layer 23 on both sides of the solid electrolyte layer 30 and disposing the cathode current collector 11 and the anode current collector 21 on the cathode active material layer 12 and the protective layer 23, respectively.

For example, the all-solid lithium metal battery 1a may be prepared by disposing the cathode active material layer 12 and the protective layer 23/the anode active material layer 22 on both sides of the solid electrolyte layer 30 and disposing the cathode current collector 11 and the anode current collector 21 on the cathode active material layer 12 and the anode active material layer 22, respectively. Alternatively, an all-solid lithium metal battery 1 may be prepared by sequentially stacking a protective layer 23 a solid electrolyte layer 30, a cathode active material layer 12, and a cathode current collector 11, on an anode current collector 21.

Alternatively, an all-solid lithium metal battery 1a may be prepared by sequentially stacking an anode active material layer 22, the protective layer 23 a solid electrolyte layer 30, a cathode active material layer 12, and a cathode current collector 11, on an anode current collector 21.

[Method of Manufacturing Anode for Lithium Metal Battery]

A method of manufacturing an anode for a lithium metal battery according to another embodiment includes: providing an anode current collector or providing a stack structure in which an anode active material layer is disposed on the anode current collector; and providing a protective layer on the anode current collector or on the anode active material layer, wherein the protective layer includes sulfurized polyacrylonitrile (SPAN). A lithium metal battery including the anode prepared according to the method has improved cycle characteristics.

First, an anode current collector is provided. For the anode current collector, refer to the above-described anode. For example, a copper foil is provided as the anode current collector. Alternatively, a stack structure in which the anode active material layer is disposed on the anode current collector is provided. A method for disposing the anode active material layer on the anode current collector is not particularly limited. For example, the lithium metal layer may be disposed on the metal substrate by sputtering, or the like. Alternatively, for example, a lithium foil may be disposed on a metal substrate, followed by rolling, to prepare a copper foil/lithium foil stack structure. Alternatively, a commercially available stack structure in which a lithium metal layer is stacked on a copper foil may be used. Alternatively, a stack structure may be prepared by coating a metal substrate with a composition including lithium powder and a binder and drying the coated composition. For the lithium powder and the binder, refer to the above-described anode.

Subsequently, a protective layer is provided on the anode current collector or on the anode active material layer. For example, the protective layer may be formed by preparing a slurry by mixing sulfurized polyacrylonitrile SPAN, a binder, and a solvent, coating the metal substrate or the anode active material layer with the slurry, and drying the coated slurry. Coating methods are not particularly limited and the coating may be performed by using doctor blade, or the like. The slurry may include, for example, sulfurized polyacrylonitrile SPAN, the binder, and the solvent. The slurry may further include a metal oxide. The slurry may include, for example, sulfurized polyacrylonitrile SPAN, the metal oxide, the binder, and the solvent. The slurry may further include a carbonaceous material. The slurry may include, for example, sulfurized polyacrylonitrile SPAN, the carbonaceous material, the binder, and the solvent. The slurry may include, for example, sulfurized polyacrylonitrile SPAN, the metal oxide, the carbonaceous material, the binder, and the solvent. For the metal oxide, the carbonaceous material, and the binder, refer to the above-described anode. The solvent may be an organic solvent. The solvent may be, for example, NMP, but is not limited thereto, and any solvents commonly available in the art may also be used.

In the case of directly preparing sulfurized polyacrylonitrile SPAN, for example, a method described below may be used.

A raw material mixture of polyacrylonitrile powder and sulfur powder is heated. The raw material mixture may be mixed using a common mixing device such as a mixer, a mortar, and a ball mill. As the raw material mixture, a simple mixture of sulfur and polyacrylonitrile may be used. Alternatively, the raw material mixture may be molded into a pellet form and used. The raw material mixture may consist of polyacrylonitrile and sulfur (S) or may further include materials common applicable to the anode, such as a conductive material.

By heating the raw material mixture during a heat treatment process, sulfur (S) contained in the raw material mixture is introduced into a structure of polyacrylonitrile. The heat treatment process may be performed in a closed system or in an open system. In order to suppress the loss of sulfur (S) vapor, the heat treatment process may be performed in a closed system. An atmosphere for the heat treatment process may be, for example, an atmosphere that does not prevent sulfur (S) from being introduced into polyacrylonitrile, e.g., an atmosphere not containing hydrogen or a non-oxidizing atmosphere. In the case where hydrogen is present in a heat treatment atmosphere, sulfur (S) reacts with hydrogen to generate hydrogen sulfide in a reaction system, and thus sulfur may be removed from the reaction system. By performing the heat treatment in a non-oxidizing atmosphere, sulfur in a vapor state reacts with polyacrylonitrile simultaneously with ring closure reaction of polyacrylonitrile, thereby obtaining sulfurized polyacrylonitrile SPAN. The non-oxidizing atmosphere includes an atmosphere in which a pressure is reduced to a low oxygen concentration to the extent that oxidation does not proceed, an inert gas atmosphere such as a nitrogen or argon atmosphere, and a sulfur gas atmosphere. The non-oxidizing atmosphere in a closed state may be obtained by adding the raw material mixture to a container in which airtightness is maintained to the extent that sulfur (S) vapor is not lost and heating the container in which a reduced pressure or an inert gas atmosphere is maintained. Alternatively, the raw material mixture may be heated in a vacuum-packed state with an aluminum laminate film or the like inhibiting reaction with sulfur vapor. The heat treatment temperature of the raw material mixture in the heat treatment process may be a temperature at which sulfur may be introduced into polyacrylonitrile and the generated sulfurized polyacrylonitrile is not denatured. The heat treatment temperature may be from 250 °C to 500 °C, from 250 °C to 400 °C, or from 250 °C to 300 °C. The heat treatment temperature may be a temperature equal to or higher than a temperature at which sulfur (S) vaporizes. Vaporization refers to a phase change of sulfur from a liquid or solid to gas and the phase change may occur by boiling, evaporation, and sublimation. For example, a melting point of α-sulfur (S, rhombic sulfur) is 112.8 °C, a melting point of β-sulfur (S, monoclinic sulfur) is 119.6 °C, and a melting point of γ- sulfur (S, monoclinic sulfur) is 106.8 °C. A boiling point of sulfur (S) is 444.7 °C. Because a vapor pressure of sulfur is high, generation of sulfur vapor may be visually observed at a temperature of the raw material mixture of 150 °C or higher. In the case where the temperature of the raw material mixture is 150 °C or higher, sulfur reflux is possible. In the case where sulfur is refluxed in the heat treatment process, a refluxing device may be used. Even in the case where the sulfur content is excessive in the raw material mixture, a sufficient amount of sulfur (S) may be introduced into polyacrylonitrile during the heat treatment process. In the case where an excess of sulfur is used relative to polyacrylonitrile, problems may be prevented by removing the elemental sulfur from a heat-treated resultant after the heat treatment process. Adverse effects may be inhibited. In the case where a mixing weight ratio of polyacrylonitrile and sulfur is from 1:2 to 1:10 in the raw material mixture, a sufficient amount of sulfur may be introduced into polyacrylonitrile while inhibiting adverse effects caused by remaining elemental sulfur by removing the elemental sulfur at a temperature of 200 °C to 250 °C while reducing a pressure of the heat-treated resultant after the heat treatment process. In the case where the process of removing elemental sulfur from the heat-treated resultant is not performed after the heat treatment process, the heat-treated resultant may be used as sulfurized polyacrylonitrile. In the case where the elemental sulfur is removed from the heat-treated resultant after the heat treatment process, the heat-treated resultant after the elemental sulfur-removing process may be used as sulfurized polyacrylonitrile. The element sulfur-removing process may be performed, for example, for 1 hour to 6 hours. After heating the sulfurized polyacrylonitrile from room temperature to 900 °C at a heating ratio of 20 °C/min, a mass loss obtained by thermogravimetric analysis is 10 % or less at 400 °C. On the contrary, in the case where a mixture of sulfur powder and polyacrylonitrile powder is heated under the same conditions, a mass loss starts at about 120 °C and a large mass loss occurs at a temperature of 200 °C or higher due to a rapid loss of sulfur. Sulfur (S) in the sulfurized polyacrylonitrile may be present in a stable state combined with polyacrylonitrile or as an elemental sulfur but trapped in a cross-linked structure during ring closure of polyacrylonitrile, and thus sulfur is difficult to evaporate even if heated. The prepared sulfurized polyacrylonitrile may be in a powder state.

Hereinafter, one or more example embodiments of the inventive concept will be described in more detail with reference to the following examples and comparative examples. However, these examples are not intended to limit the purpose and scope of the one or more example embodiments.

Example 1: Cu substrate/ Li metal layer/SPAN-containing Protective Layer Anode

(Preparation of Anode)

Sulfurized polyacrylonitrile (SPAN) having an average particle diameter (D50) of 0.5 $\mu$m and polyvinylidene fluoride (PVDF) as a binder were prepared in a weight ratio of 9:1 and dry-mixed using a Thinky mixer at 100 rpm for 5 minutes to prepare a mixture. A solvent (NMP) was added to the mixture to prepare a slurry. The slurry was coated on a 20 $\mu$m-thick lithium metal thin film disposed on a copper current collector using a doctor blade and dried in a vacuum oven at 70 °C to prepare an anode. The anode had a structure in which a protective layer having a thickness of 10 $\mu$m was formed on the lithium metal thin film disposed on the copper current collector.

(Preparation of Cathode)

LiCoO$_2$ powder and a carbonaceous conductive material (Super-P; Timcal Ltd.)were uniformly mixed in a weight ratio of 90:5, and a polyvinylidene fluoride (PVDF) binder solution was added thereto such that a weight ratio of active material carbonaceous conductive material:binder was 90:5:5, to prepare a cathode active material slurry.
The prepared slurry was coated on a 15 $\mu$m-thick aluminum substrate using a doctor blade and dried at 120 °C under a reduced pressure, and then rolled using a roll press into a sheet to prepare a cathode.

(Preparation of Coin Cell)

A polypropylene separator (Celgard 3510) was disposed between the cathode and the anode and an electrolyte is injected thereinto to prepare a coin cell.
As an electrolyte, a solution in which 1.15 M LiPF$_6$ was dissolved in a mixture of ethylene carbonate (EC), ethyl methyl carbonate (EMC), and dimethyl carbonate (DMC) in a volume ratio of 2:4:4) was used.

Example 2: Cu substrate/ Li metal layer/SPAN+Nb$_2$O$_5$-containing Protective Layer Anode

An anode and a coin cell were prepared in the same manner as in Example 1, except that a protective layer was prepared by mixing sulfurized polyacrylonitrile SPAN having an average particle diameter (D50) of 0.5 $\mu$m, Nb$_2$O$_5$ as a metal oxide, and polyvinylidene fluoride (PVDF) as a binder in a weight ratio of 8:1:1.

Example 3: Cu substrate/ Li metal layer/SPAN+Nb$_2$O$_5$+DB Protective Layer Anode

An anode and a coin cell were prepared in the same manner as in Example 1, except that a protective layer was prepared by mixing sulfurized polyacrylonitrile SPAN having an average particle diameter (D50) of 0.5 $\mu$m, Nb$_2$O$_5$ as a metal oxide, Denka Black, which is amorphous carbon, as a carbonaceous conductive material, and polyvinylidene fluoride (PVDF) as a binder in a weight ratio of 4:1:3.33:0.93.

Example 4: Cu substrate/ Li metal layer/SPAN+TiO$_2$+DB Protective Layer Anode

An anode and a coin cell were prepared in the same manner as in Example 1, except that a protective layer was prepared by mixing sulfurized polyacrylonitrile SPAN having an average particle diameter (D50) of 0.5 $\mu$m, TiO$_2$ as a metal oxide, Denka Black, which is amorphous carbon, as a carbonaceous conductive material, and polyvinylidene fluoride (PVDF) as a binder in a weight ratio of 4:1:3.33:0.93.

Example 5: Cu substrate/SPAN+Nb$_2$O$_5$+DB Protective Layer Anode

An anode and a coin cell were prepared in the same manner as in Example 1, except that a 30 $\mu$m-thick copper current collector was used instead of the 20 $\mu$m-thick lithium metal thin film disposed on the copper current collector.
The anode having a structure in which the protective layer was directly disposed on the copper current collector was used.

Comparative Example 1: Cu substrate/ Li metal layer/-S-S-bond-containing Polymer Protective Layer Anode

An anode and a coin cell were prepared in the same manner as in Example 1, except that an -S-S-(disulfide)-bond-containing polymer (poly(sulfur-random-(1,3-diisopropenylbenzene)) was used instead of the sulfurized polyacrylonitrile SPAN having an average particle diameter D50 of 0.5 $\mu$m.

Comparative Example 2: Cu substrate/ Li metal layer/PAN-containing Protective Layer Anode

An anode and a coin cell were prepared in the same manner as in Example 1, except that a protective layer was prepared by using polyacrylonitrile (PAN) having an average particle diameter of 1 $\mu$m (weight average molecular weight of 160,000 Dalton) instead of the sulfurized polyacrylonitrile SPAN having an average particle diameter (D50) of 0.5 $\mu$m, and mixing the polyacrylonitrile (PAN), Denka Black, which is amorphous carbon, as a carbonaceous conductive material, and polyvinylidene fluoride (PVDF) as a binder in a weight ratio of 5:3.33:0.93.

Comparative Example 3: Cu substrate/ Li metal laver/heat-treated PAN-containing Protective Layer Anode

An anode and a coin cell were prepared in the same manner as in Example 1, except that a protective layer was prepared by using heat-treated polyacrylonitrile (PAN) instead of the sulfurized polyacrylonitrile SPAN having an average particle diameter (D50) of 0.5 $\mu$m, Denka Black, which is amorphous carbon, as a carbonaceous conductive material, and polyvinylidene fluoride (PVDF) as a binder in a weight ratio of 5:3.33:0.93.
The heat-treated polyacrylonitrile was prepared by heat-treating polyacrylonitrile (PAN, having an average particle diameter of 1 $\mu$m and a weight average molecular weight of 160,000 Dalton). The heat treatment was performed in an argon atmosphere. After putting polyacrylonitrile powder into a furnace, temperature was increased from 25 °C to 350 °C at a heating ratio of 10 °C/min and maintained at 350 °C for 6 hours, and then the furnace was cooled to prepare heat-treated polyacrylonitrile.

Comparative Example 4: Cu substrate/ Li metal layer/Nb$_2$O$_5$ Protective Layer Anode

An anode and a coin cell were prepared in the same manner as in Example 1, except that a protective layer was prepared by mixing Nb$_2$O$_5$ as a metal oxide and polyvinylidene fluoride (PVDF) as a binder in a weight ratio of 9:1.

Comparative Example 5: Cu substrate/ Li metal layer Anode

An anode and a coin cell were prepared in the same manner as in Example 1, except that a protective layer was not disposed.

Evaluation Example 1: Charging/discharging Test (I)

Each of the lithium batteries prepared in Example 3, Example 5, and Comparative Example 5 was charged with a constant current of 0.1 C rate at 25 °C until a voltage reached 4.2 V (vs. Li), and the charging process was cut-off at a rate of 0.05 C rate in a constant voltage mode while the voltage of 4.2 V was maintained. Subsequently, the lithium battery was discharged with a constant current of 0.1 C rate until the voltage reached 3.0 V (vs. Li) during discharging (formation cycle).

The lithium battery that had undergone the formation cycle was charged with a constant current with a current of 0.2 C rate at 25 °C until the voltage reached 4.2 V (vs. Li), and then the charging process was cut-off at a current of 0.05 C rate in a constant voltage mode while maintaining the voltage of 4.2 V. Subsequently, the lithium battery was discharged with a constant current of 0.2 C rate until the voltage reached 3.0 V (vs. Li) during discharging (1st cycle). This cycle was repeated to a 200th cycle under the same conditions.

The lithium batteries were rested for 10 minutes after every charging/discharging cycle. Some results of the room temperature charging/discharging test are shown in Table 1 below. Capacity retention ratio is defined as shown Equation 1 below.

Equation 1

Capacity retention ratio [%] = [Discharging capacity at 200th cycle / discharging capacity at 1st cycle] × 100

Table 1

|  | Composition of Protective Layer | Capacity Retention Ratio [%] |
|---|---|---|
| Example 3 | SPAN+$Nb_2O_5$+DB | 72 |
| Comparative Example 5 | - | 44 |

As shown in Table 1, the lithium battery of Example 3 had an increased capacity retention ratio compared to the lithium battery of Comparative Example 5.

It is considered that such a high capacity retention ratio could be obtained because deterioration of the anode active material layer was effectively inhibited by the protective layer including sulfurized polyacrylonitrile.

The lithium battery of Comparative Example 5 not including a protective layer showed poor lifespan characteristics.

Although not shown in Table 1, it was confirmed that charging/discharging of lithium batteries of Examples 4 and 5 was possible.

Evaluation Example 2: Charging/discharging Test (II)

Each of the lithium batteries prepared in Examples 1 and 2 and Comparative Examples 2 to 4 was charged with a constant current of 0.1 C rate at 25 °C until a voltage reached 4.3 V (vs. Li), and the charging process was cut-off at a rate of 0.05 C rate in a constant voltage mode while the voltage of 4.3 V was maintained. Subsequently, the lithium battery was discharged with a constant current of 0.1 C rate until the voltage reached 3.0 V (vs. Li) during discharging (formation cycle).

The lithium battery that had undergone the formation cycle was charged with a constant current with a current of 0.3 C rate at 25 °C until the voltage reached 4.3 V (vs. Li), and then the charging process was cut-off at a current of 0.05 C rate in a constant voltage mode while maintaining the voltage of 4.3 V. Subsequently, the lithium battery was discharged with a constant current of 0.3 C rate until the voltage reached 3.0 V (vs. Li) during discharging (1st cycle). This cycle was repeated to a 100th cycle under the same conditions.

The lithium batteries were rested for 10 minutes after every charging/discharging cycle. Some results of the room temperature charging/discharging tests are shown in Table 2 below. Capacity retention ratio is defined as shown

Equation 2 below.

Equation 2

Capacity retention ratio [%] = [Discharging capacity at 100th cycle / discharging capacity at 1st cycle] × 100

Table 2

|  | Composition of Protective Layer | Capacity Retention Ratio [%] |
| --- | --- | --- |
| Example 1 | SPAN | 75 |
| Example 2 | SPAN+$Nb_2O_5$ | 88 |
| Comparative Example 1 | -S-S- (disulfide)-containing polymer | 18 |
| Comparative Example 2 | PAN + DB | 4 |
| Comparative Example 3 | Heat-treated PAN + DB | 1 |
| Comparative Example 4 | $Nb_2O_5$ | 58 |

As shown in Table 2, the lithium batteries according to Examples 1 and 2 had increased capacity retention ratios compared to the lithium batteries of Comparative Examples 1 to 4.

It is considered that such high capacity retention ratios could be obtained because deterioration of the anode active material layer was effectively inhibited by the protective layer including sulfurized polyacrylonitrile.

The lithium battery of Example 2 had a higher capacity retention ratio than that of the lithium battery of Example 1. It is considered that because the protective layer of the lithium battery of Example 2 further includes the metal oxide, strength and/or elasticity of the protective layer was further improved and thus lithium ion conductivity was further improved.

The lithium batteries of Comparative Examples 1 to 4 had poor lifespan characteristics. It is considered that the protective layer could not effectively prevent deterioration of the anode active material layer in the lithium batteries of Comparative Examples 1 to 4.

Although embodiments are described above with reference to illustrated drawing, the present inventive concept is not limited thereto. It is obvious that various alternations and modifications will be apparent to one or ordinary skill in the art to which this application belongs within protection coverage of the inventive concept.

According to an aspect, by including the anode for lithium metal batteries having a new structure, deterioration of the anode active material layer may be prevented, and a lithium metal battery having improved cycle characteristics may be provided..

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the disclosure as defined by the following claims.

**Claims**

1. An anode (20) for a lithium metal battery (1), comprising:

   an anode current collector (21); and
   a protective layer (23) disposed on the anode current collector (21),
   wherein an anode active material layer (22) is disposed or absent between the anode current collector (21) and the protective layer (23),
   the protective layer (23) comprises sulfurized polyacrylonitrile (SPAN), and
   the anode active material layer (22) comprises lithium metal or a lithium alloy.

2.  The anode for a lithium metal battery of claim 1, wherein the sulfurized polyacrylonitrile is in the form of particles, and an average particle diameter of the sulfurized polyacrylonitrile is from about 100 nm to about 10 $\mu$m.

3.  The anode for a lithium metal battery of claim 1, wherein the protective layer (23) further comprises $Li_2S$.

4.  The anode for a lithium metal battery of claim 1, wherein the protective layer (23) further comprises a binder, and the binder comprises a fluorine-based binder.

5.  The anode for a lithium metal battery of claim 4, wherein the protective layer (23) comprises 1 to 30 parts by weight of the binder, based on 100 parts by weight of the sulfurized polyacrylonitrile.

6.  The anode for a lithium metal battery of claim 1, wherein the protective layer (23) further comprises a metal oxide, and an average particle diameter of the metal oxide is from about 100 nm to about 2 $\mu$m.

7.  The anode for a lithium metal battery of claim 6, wherein the metal oxide comprises $Nb_2O_5$, $TiO_2$, $Al_2O_3$, $SiO_2$, BaTiOs, a metal organic framework (MOF), polyhedral oligomeric silsesquioxanes (POSS), $Li_2CO_3$, $Li_3PO_4$, $Li_2O$, montmorillonite, $ZrO_2$, $CeO_2$, $Mn_3O_4$, or a combination thereof.

8.  The anode for a lithium metal battery of claim 6, wherein the metal oxide comprises a pseudo-capacitive oxide having lithiophilicity.

9.  The anode for a lithium metal battery of claim 6, wherein the protective layer (23) comprises 5 to 60 parts by weight of the metal oxide, based on 100 parts by weight of the sulfurized polyacrylonitrile.

10. The anode for a lithium metal battery of claim 1, wherein the protective layer (23) further comprises a carbonaceous material, and the carbonaceous material is a carbonaceous conductive material.

11. The anode for a lithium metal battery of claim 10, wherein the carbonaceous material comprises amorphous carbon, and an average particle diameter of the amorphous carbon is from about 10 nm to about 100 nm.

12. The anode for a lithium metal battery of claim 1, wherein the protective layer (23) has a thickness of about 3 $\mu$m to about 20 $\mu$m.

13. A lithium metal battery (1) comprising:

    a cathode (10); an anode according to any one of claims 1 to 12; and
    an electrolyte disposed between the cathode (10) and the anode (20).

14. The lithium metal battery of claim 13, wherein the cathode (10) comprises a cathode current collector (11) and the anode (20) comprises an anode current collector (21),

    at least one of the cathode current collector (11) and the anode current collector (21) comprises a base film and a metal layer disposed on one side or both sides of the base film,
    the base film comprises a polymer, the polymer comprising polyethyleneterephtalate (PET), polyethylene (PE), polyprolylene (PP), polybutyleneterephthalate (PBT), polyimide (PI), or a combination thereof, and
    the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

15. A method for manufacturing an anode (20) for a lithium metal battery (1), the method comprising:

    providing an anode current collector (21) or providing a stack structure in which an anode active material layer (22) is disposed on the anode current collector (21); and
    providing a protective layer (23) on the anode current collector (21) or on the anode active material layer (22), wherein the protective layer (23) comprises sulfurized polyacrylonitrile (SPAN), and
    the anode active material layer (22) comprises lithium metal or a lithium alloy.

# FIG. 1

# FIG. 2

# FIG. 3

# FIG. 4

# FIG. 5

# FIG. 6

# FIG. 7

1

4
2
4
3

7

8

5

# FIG. 8

# FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102022091152